# FASCICULE DE BREVET EUROPEEN

(11) **EP 3 314 421 B1**
(45) Date de publication et mention de la délivrance du brevet: **05.06.2019**
(21) Numéro de dépôt: 16750894.4
(22) Date de dépôt: 28.06.2016
(51) Int. Cl.: G06F 8/41, G06F 9/455

(54) **PROCÉDÉ D'EXÉCUTION D'UN PROGRAMME D'ORDINATEUR COMPORTANT UNE FONCTION PARAMÉTRÉE**
VERFAHREN ZUR AUSFÜHRUNG EINES COMPUTERPROGRAMMS MIT EINER PARAMETRISIERTEN FUNKTION
METHOD FOR EXECUTING A COMPUTER PROGRAM WITH A PARAMETERISED FUNCTION

(30) Priorité: 29.06.2015 FR 1556098
(43) Date de publication de la demande: 02.05.2018
(73) Titulaire: Commissariat à l'Energie Atomique et aux Energies Alternatives, 75015 Paris (FR)
(72) Inventeur: QUEVA, Caroline, 38530 Pontcharra (FR); COUROUSSE, Damien, 38100 Grenoble (FR); LHUILLIER, Yves, 91120 Palaiseau (FR)
(74) Mandataire: Colombo, Michel
(86) Numéro de dépôt international: PCT/FR2016/051584
(87) Numéro de publication internationale: WO 2017/001754

(56) Documents cités:
- US-A1- 2010 095 284
- US-B1- 6 427 234
- ARNOLD M ET AL: "Adaptive optimization in the Jalapeno JVM", PLDI09 : PROCEEDINGS OF THE 2009 ACM SIGPLAN CONFERENCE ON PROGRAMMING LANGUAGE DESIGN AND IMPLEMENTATION ; JUNE 15 - 20, 2009, DUBLIN, IRELAND; [SIGPLAN NOTICES : A MONTHLY PUBLICATION OF THE SPECIAL INTEREST GROUP ON PROGRAMMING LANGUAGES OF THE AS, vol. 35, no. 10, 1 octobre 2000 (2000-10-01), pages 47-65, XP002305517, DOI: 10.1145/354222.353175 ISBN: 978-1-60558-392-1 cité dans la demande
- Markus Mock ET AL: "Calpa: A Tool for Automating Dynamic Compilation", Proceedings of the Second Workshop on Feedback-Directed Optimization in conjunction with MICRO-32, Haifa, Israel, 15 novembre 1999 (1999-11-15), pages 1-10, XP055260801, Extrait de l'Internet: URL:http://cseweb.ucsd.edu/~calder/fdo/fdo 2/papers/fdo2-mock.ps [extrait le 2016-03-23] cité dans la demande
- MIHAI BURCEA ET AL: "A Runtime Optimization System for OpenMP", 1 janvier 2003 (2003-01-01), OPENMP SHARED MEMORY PARALLEL PROGRAMMING LECTURE NOTES IN COMPUTER SCIENCE, SPRINGER, BERLIN, DE, PAGE(S) 42 - 53, XP019047997, ISBN: 978-3-540-40435-4 cité dans la demande abrégé page 42, alinéa 1 - page 42, alinéa 2 page 43, alinéa 4 - page 44, alinéa 2 page 45, dernier alinéa - page 47, alinéa 4

## Description

L'invention concerne un procédé d'exécution d'un programme d'ordinateur comportant une fonction paramétrée susceptible d'être exécutée une ou plusieurs fois au cours de l'exécution du programme. L'invention concerne également un support d'enregistrement d'informations, un programme d'ordinateur et une unité centrale pour la mise en oeuvre de ce procédé.

Les fonctions paramétrées comportent au moins un paramètre dont la valeur est obtenue au moment où la fonction est appelée pour être exécutée par un microprocesseur ou durant son exécution par le microprocesseur.

Des procédés connus pour exécuter de tels programmes d'ordinateur comportent :
a) la fourniture d'un code générique de la fonction dans lequel chaque paramètre de la fonction est codé comme une variable de sorte que ce code générique ne contient pas en lui-même la valeur de ce paramètre mais contient une opération de lecture de sa valeur à une adresse spécifiée par le code générique,
b) la vérification d'une condition,
c) uniquement si la condition est vérifiée, la génération par le microprocesseur, d'un code spécialisé de cette fonction, dans le langage machine du microprocesseur, puis l'enregistrement dans une mémoire de ce code spécialisé, ce code spécialisé réalisant, lorsqu'il est exécuté par le microprocesseur, la même fonction que le code générique mais dans le cas particulier où au moins un paramètre de la fonction est spécialisé avec une première valeur spécifique, la spécialisation d'un paramètre de la fonction avec la première valeur spécifique consistant à affecter cette valeur spécifique à ce paramètre puis à traiter ce paramètre non plus comme une variable mais comme une constante de sorte que le code spécialisé ne comporte aucune opération de lecture de sa valeur à une adresse située en dehors de la plage continue d'adresses où est enregistré ce code spécialisé,
d) ensuite, lorsque la fonction est réalisée avec la première valeur spécifique du paramètre, si le code spécialisé est enregistré dans la mémoire, le microprocesseur réalise cette fonction en exécutant directement le code spécialisé enregistré dans la mémoire sans utiliser le code générique de cette fonction, et sinon
e) le microprocesseur réalise cette fonction en utilisant son code générique.

Dans cette description, par l'expression « lecture de la valeur d'un paramètre à une adresse », on désigne aussi bien l'opération de lecture de la valeur de ce paramètre dans une mémoire que dans un registre. Ainsi, le terme « adresse » désigne aussi bien une adresse dans une mémoire qu'un identifiant d'un registre dans lequel doit être lue la valeur de ce paramètre.

Le code spécialisé d'une fonction s'exécute avec un coût moindre que le code générique de cette fonction, notamment parce qu'il a pu être optimisé, à partir des valeurs spécifiques connues des paramètres. Le coût peut être le temps d'exécution, la consommation électrique, la puissance électrique consommée, la température, le niveau de bruit électrique ou acoustique. Par exemple, contrairement au code générique, le code spécialisé ne comporte pas d'opération de lecture de la valeur des paramètres spécialisés en dehors de la plage d'adresses où est enregistré ce code spécialisé. Ainsi, pour réaliser la même fonction, le code spécialisé comporte moins d'instructions que le code générique ou comporte des instructions de lecture moins coûteuses, par exemple, si les instructions de lecture sont réarrangées pour accéder à de la mémoire locale. Si son exécution nécessite moins d'accès à la mémoire. Il sera probablement plus rapide et donc moins coûteux. C'est pour cela que, dès que c'est possible, il est généralement préférable d'exécuter le code spécialisé plutôt que le code générique.

Par exemple, un tel procédé est divulgué dans l'article suivant :
- M. Arnold et AL « Adaptive optimization in the jalapeño JVM », ACM SIGPLAN Notices, vol. 46, n°4, pp 65-83, 2011.

Par la suite, cet article est désigné sous l'abréviation « Arnod2011 ». Cet article enseigne qu'il est souhaitable de déclencher la génération d'un code spécialisé si la condition suivante est vérifiée : C_{J} + T_{J} < T_{I}, où :
- C_{J} est le temps nécessaire pour générer le code spécialisé,
- T_{J} est le temps nécessaire pour exécuter le code spécialisé généré, et
- T_{I} est le temps nécessaire pour exécuter le code générique de la fonction.

Autrement dit, si le cumul du temps pour générer le code spécialisé et du temps pendant lequel il sera exécuté dans le futur est strictement inférieur au temps qui sera nécessaire dans le futur pour réaliser la fonction à partir du code générique, alors le code spécialisé est systématiquement généré.

Les quantités C_{J}, T_{J} et T_{I} dépendent de la fonction paramétrée à réaliser. Ainsi, la condition proposée dans Arnold 2011 présente l'avantage d'être spécifique à chaque fonction du programme à exécuter. Cette condition est donc adaptée à la fonction paramétrée qui lui est associée. Cela permet une plus grande flexibilité dans la décision de générer ou non des codes spécialisés pour les différentes fonctions paramétrées du programme. Le procédé de l'article Arnold2011 s'avère donc plus performant que les procédés connus qui utilisent la même condition quel que soit la fonction paramétrée. Ainsi, il permet, plus fréquemment que d'autres procédés connus, de réduire le coût d'exécution du programme. Par exemple, il permet de raccourcir plus efficacement le temps d'exécution de ce programme.

De l'état de la technique est également connu de :
- US6427234B1,
- Markus Mock et Al: « Calpa : A tool for Automating Dynamic Compilation », Proceedings of the Second Workshop on Feedback-directed Optimization in conjuction with Micro-32, Haifa, Israel, 15/11/1999, pages 1-10 ;
- Mihai Burcea et Al: « A Runtime Optimization System for OpenMP », OpenMP shared memory parallel programming lecture notes in computer science, Springer, Berlin, pages 42-53, 1/01/2003 ;
- US2010095284A1.

US6427234B1 décrit le déclenchement conditionnel de la spécialisation d'une portion de code. Une fois la spécialisation déclenchée, celle-ci est réalisée pour toutes les valeurs des paramètres rencontrées.

Toutefois, il est encore souhaitable d'améliorer le procédé de l'article Arnold2011 pour minimiser, encore plus un coût, tel que le temps d'exécution du programme, dans la majorité des cas susceptibles d'être rencontrés lors de l'exécution de ce programme.

L'invention a donc pour objet un tel procédé d'exécution d'un programme d'ordinateur conforme à la revendication 1.

Dans le procédé ci-dessus, même si l'écart entre les coûts Klib et Kdyn est inférieur au coût Kgen, la génération d'un code spécialisé pour la fonction est déclenchée si cette fonction est susceptible d'être exécutée plusieurs fois. Ainsi, dans cette situation, la génération du code spécialisé n'est pas systématiquement inhibée. Cela permet, dans la majorité des cas, d'accélérer l'exécution du programme. En effet, dans ce cas là, on prend en compte le fait que le coût Kgen peut être amorti non pas après une seule exécution du code spécialisé mais seulement après plusieurs exécutions de ce code spécialisé.

De plus, le procédé revendiqué conserve l'avantage du procédé d'Arnold2011. En effet, le seuil n'est pas défini arbitrairement, mais au contraire dépend des caractéristiques de la fonction à exécuter.

Enfin, gérer des compteurs et des seuils associés à la fois à une fonction et à des valeurs spécifiques de ses paramètres permet de définir automatiquement des seuils de déclenchement de la génération du code spécialisé différents en fonction de la valeur spécifique utilisée pour spécialiser le même paramètre de la même fonction. Grâce à cela, il est possible de déclencher la génération d'un code spécialisé uniquement lorsque la valeur spécifique utilisée pour cela conduit à un code spécialisé qui présente de l'intérêt pour diminuer le coût et de ne pas déclencher cette génération si la valeur spécifique utilisée pour cela conduit à un code spécialisé qui présente peu d'intérêt pour diminuer le coût. On peut donc plus finement optimiser l'exécution du programme et diminuer encore plus le coût d'exécution du programme d'ordinateur.

Les modes de réalisation du procédé peuvent en plus présenter les avantages suivants :-
- Utiliser un même seuil pour tous les compteurs associés à une même fonction paramétrée sans prendre en compte la valeur des paramètres de cette fonction permet de limiter les ressources mémoires utilisées pour exécuter l'étape b).
- Calculer des seuils différents pour les compteurs associés à des fonctions paramétrées différentes permet de déclencher la génération d'un code spécialisé pour chaque fonction différente en tenant compte des caractéristiques spécifiques de cette fonction. Cela permet donc de mieux optimiser la génération de code spécialisé et donc de diminuer le coût d'exécution du programme.

L'invention a également pour objet un support d'enregistrement d'informations et un programme d'ordinateur comportant des instructions pour l'exécution du procédé revendiqué, lorsque ces instructions sont exécutées par un microprocesseur.

Enfin, l'invention a pour objet une unité centrale pour exécuter un programme d'ordinateur.

L'invention sera mieux comprise à la lecture de la description qui va suivre, donnée uniquement à titre d'exemple non limitatif et faite en se référant aux dessins sur lesquels :
- la figure 1 est une illustration schématique d'une unité centrale programmée pour exécuter un programme d'ordinateur comportant des fonctions paramétrées ;
- la figure 2 est une illustration schématique de la structure d'une table utilisée dans l'unité centrale de la figure 1 ;
- la figure 3 est un organigramme d'un procédé d'exécution d'un programme d'ordinateur à l'aide de l'unité centrale de la figure 1 ;
- la figure 4 est un pseudo-code partiel d'un programme d'ordinateur susceptible d'être exécuté à l'aide du procédé de la figure 3, et
- la figure 5 est un pseudo-code partiel d'une routine de recherche mise en oeuvre dans le procédé de la figure 3.

Dans ces figures, les mêmes références numériques sont utilisées pour désigner les mêmes éléments. Dans la suite de cette description, les caractéristiques et fonctions bien connues de l'homme du métier ne sont pas décrites en détails.

Dans cette description, une « instruction » désigne une instruction machine directement exécutable par un microprocesseur. Une telle instruction est typiquement constituée :
- d'un opcode, ou code d'opération, codant la nature de l'opération à exécuter, et
- d'un ou plusieurs opérandes définissant la ou les valeurs des paramètres de cette opération.

Un « code binaire » ou un « code écrit en langage machine » est un ensemble d'instructions machines. Il s'agit typiquement d'un fichier contenant une succession de bits portant la valeur « 0 » ou « 1 », ces bits codant les instructions à exécuter par le microprocesseur. Le code binaire est directement exécutable par le microprocesseur, c'est-à-dire sans nécessiter une compilation ou une interprétation préalable.

On parle d'exécution d'une fonction pour désigner l'exécution des instructions réalisant cette fonction.

Dans un souci de simplification, dans cette description, les instructions ne sont pas représentées sous forme binaire, mais plutôt sous une forme symbolique exprimée dans un langage machine ou assembleur. En particulier, l'opcode est représenté de façon connue par un mnémonique.

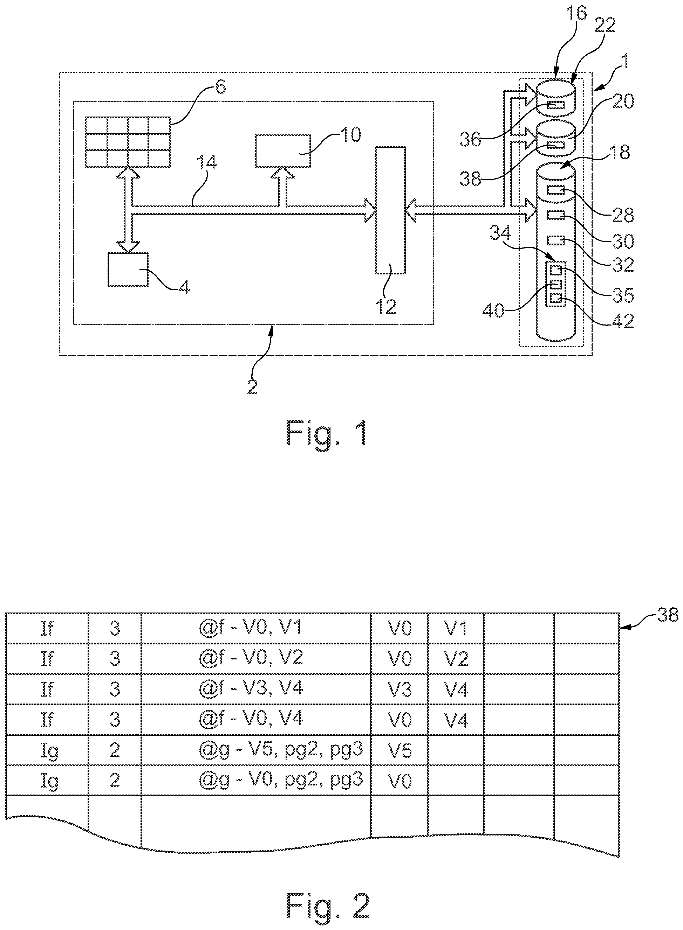

La figure 1 représente une unité centrale électronique 1 comportant un microprocesseur 2 et un support 16 d'enregistrement d'informations. Ce microprocesseur 2 comporte ici :
- une unité arithmétique et logique 4 ;
- un ensemble de registres 6 ;
- un module de commande 10 ;
- une interface 12 d'entrée/sortie de données qui permet d'accéder au support 16 par l'intermédiaire d'un bus mémoire.

Le support 16 comporte, par exemple :
- une mémoire programme 18, par exemple non volatile, telle qu'une mémoire EEPROM ou Flash, et
- une mémoire 22 à accès non séquentiel plus connu sous l'acronyme de « RAM » (Random Access Memory), et
- une mémoire 20 de données.

Ces mémoires 18, 20 et 22 peuvent être des mémoires matérielles distinctes les unes des autres ou des mémoires logicielles. Les mémoires logicielles correspondent à différentes plages d'adresses, par exemple, à l'intérieur d'une même mémoire matérielle. Il peut aussi s'agir d'une combinaison de mémoires matérielles et logicielles. En particulier, ici, la mémoire 22 est une mémoire cache logicielle et non pas une mémoire cache matérielle.

Les mémoires 18 et 22 sont configurées pour stocker des instructions devant être exécutées par l'unité 4. Typiquement, un compteur ordinal, également appelé « pointeur d'instruction », du microprocesseur 2 pointe sur l'emplacement de la mémoire 18 ou 22 contenant la prochaine instruction à exécuter par l'unité 4. Le microprocesseur 2 est notamment configuré pour exécuter les instructions stockées dans la mémoire 18 ou 22, la plus part du temps dans l'ordre où ces instructions sont stockées dans ces mémoires, et, le cas échéant, à stocker le résultat de ces instructions exécutées dans un ou plusieurs des registres 6 ou dans la mémoire 20 ou 22. Ici, on considère qu'une instruction, pour être exécutée par l'unité 4, doit être placée dans la mémoire 18 ou 22. Dans cette description, on utilisera comme synonymes « exécution par le microprocesseur 2 » et « exécution par l'unité 4 ».

Le module 10 est configuré pour déplacer des mots mémoires entre les registres 6, le support 16, et l'interface 12. On notera que les mots mémoires enregistrés dans la mémoire 22 peuvent être traités, en alternance, soit comme des instructions soit comme des données. À cet effet, le microprocesseur comporte également ici un bus d'échange de données et d'instructions 14. L'interface 12 est notamment apte à acquérir des données, par exemple depuis la mémoire 20 extérieur au microprocesseur 2. Dans ce mode de réalisation, il n'est pas fait de distinction entre le bus de données et le bus d'instructions. Ces deux types de bus sont représentés par le seul bus 14.

Dans ce mode de réalisation, les ressources mémoires utilisées sont très limitées. Par exemple, la taille de la mémoire 22 est inférieure à 1 Mo ou 500 ko ou 128 ko. Par exemple, la mémoire 22 est une mémoire volatile.

Un tel microprocesseur 2 est bien connu de l'homme du métier et ne sera pas décrit en détail. Dans cet exemple, le microprocesseur 2 est le microprocesseur MSP430 commercialisé par la société « Texas Instruments ».

La mémoire 18 comporte un programme 28 à exécuter. Il peut s'agir d'un programme apte à commander des périphériques électroniques tels qu'une interface homme-machine ou une imprimante. Il peut également s'agir d'un programme apte à acquérir des données transmises par des capteurs électroniques, puis à les traiter. Il peut aussi s'agir d'un programme qui traite des données techniques comme par exemple un programme de simulation assistée par ordinateur. De façon plus générale, l'enseignement donné ici s'applique à tout type de programmes exécutés par un microprocesseur.

Dans ce mode de réalisation, à titre d'illustration, le programme 28 n'est pas directement écrit dans le langage machine du microprocesseur 2, mais dans un langage intermédiaire indépendant des spécificités de l'architecture matérielle de l'unité centrale 1 sur laquelle doit être exécuté ce programme. Par exemple, le programme 28 est écrit en Bytecode, tel que du Bytecode Java®.

Le programme 28 comporte de nombreuses fonctions paramétrées. Une fonction paramétrée est une fonction qui comporte au moins un paramètre dont la valeur est obtenue au moment où cette fonction est appelée pour être exécutée par le microprocesseur 2 ou pendant son exécution par le microprocesseur 2. Fréquemment, un paramètre est un argument de la fonction dont la valeur est obtenue au moment où cette fonction est appelée pour être exécutée par le microprocesseur 2. On dit alors que le paramètre est explicite, car il figure explicitement comme argument de la fonction dont la valeur doit être fournie pour que la fonction puisse être réalisée. C'est le cas le plus courant pour une fonction paramétrée. Toutefois, il existe aussi des paramètres qui n'apparaissent pas comme étant explicitement des arguments de la fonction, mais dont les valeurs sont lues en mémoire lors de la réalisation de cette fonction. C'est par exemple le cas d'une variable globale. Une telle variable globale est déclarée généralement au début du programme et peut-être utilisée à l'intérieur de toutes les fonctions du programme sans qu'il soit nécessaire que cette variable globale apparaisse explicitement dans la liste des arguments de ces fonctions. Par exemple, une variable globale peut être utilisée pour contenir la taille d'une image ou d'une matrice. Un autre exemple d'un paramètre implicite est une variable destinée à contenir une valeur retournée par une sous-fonction appelée par la fonction.

Puisque les valeurs des paramètres ne sont pas connues au moment où le programme est écrit, mais seulement au moment de son exécution, chaque paramètre est codé comme une variable dans le code générique de la fonction paramétrée. Ainsi, le code générique de chaque fonction paramétrée, contenu dans le programme 28, comporte des opérations de lecture de la valeur de chaque paramètre dans une mémoire, avant de pouvoir traiter ce paramètre. Par exemple, la valeur du paramètre est utilisée, à l'intérieur du code générique de la fonction, comme opérande d'une ou plusieurs opérations à réaliser. Il peut s'agir de n'importe quelle opération. Par exemple, ces opérations sont des opérations arithmétiques, booléennes ou de lecture d'une données à une adresse spécifiée par la valeur du paramètre. Le paramètre peut aussi être de nature non fonctionnelle. Par exemple, il contient des informations sur les caractéristiques de la micro-architecture du microprocesseur 2 sur lequel va être exécuté le programme 28.

Une fonction correspond à au moins un bloc de base. Un bloc de base est une succession d'instructions à exécuter systématiquement les unes après les autres et donc situées à des adresses consécutives dans la mémoire programme 8 lorsqu'elles sont chargées dans cette mémoire. Un bloc de base comprend un seul point d'entrée (la première instruction du bloc) et un seul point de sortie (la dernière instruction). Ce bloc de base se termine par un branchement, c'est-à-dire un saut à une adresse non-consécutive de la mémoire programme 10. Le début du bloc de base débute par une instruction vers laquelle un branchement du programme pointe. Toutefois, une fonction n'est pas limitée à un seul bloc de base et peut comporter plusieurs blocs de base dont les exécutions doivent être enchaînées les unes après les autres. Par la suite, pour simplifier cette description, on considère que le programme 28 comporte deux fonctions paramétrées f et g. La fonction f comporte deux paramètres notés pf1 et pf2 et la fonction g comporte trois paramètres notés pg1, pg2 et pg3.

Dans le cas particulier décrit ici, pour exécuter le programme 28 sur le microprocesseur 2, la mémoire 18 comporte aussi :
- le code d'un interpréteur 30 de Bytecode,
- le code d'un générateur 32 de code spécialisé, et
- le code d'un gestionnaire 34 du flux d'exécution du programme à exécuter.

Chacun de ces codes 30, 32 et 34 est, de préférence, écrit dans le langage machine du microprocesseur 2 et donc directement exécutable par ce microprocesseur. Dans cette description, lorsqu'on dit qu'un code, une instruction ou un bloc d'instructions est directement exécutable par le microprocesseur 2, cela signifie que ce code, cette instruction ou ce bloc d'instructions est écrit dans le langage machine du microprocesseur 2 et qu'il n'est donc pas nécessaire de le compiler ou de l'interpréter avant de pouvoir l'exécuter.

L'interpréteur 30 est également connu sous le terme de « machine virtuelle » dans le cas particulier du Bytecode Java. L'interpréteur contient un jeu de routines en langage machine associées à chaque instruction contenue dans le jeu d'instruction bytecode. L'interprétation consiste à exécuter la routine en langage machine correspondant à chaque instruction bytecode du programme.

Le générateur 32 génère un code binaire spécialisé à partir du code générique d'une fonction et l'enregistre dans la mémoire 22. Dans ce mode de réalisation, le générateur 32 est un compilateur à la volée plus connu sous le nom de « compilateur JIT (Just In Time) ». Ici, il est utilisé pour générer, à partir du code générique d'une fonction, un code spécialisé de cette fonction en spécialisant un ou plusieurs des paramètres de cette fonction. La spécialisation d'un paramètre d'une fonction consiste à affecter une valeur spécifique à ce paramètre, puis à optimiser et à compiler le code générique de cette fonction en tenant compte de la valeur spécifique connue du paramètre spécialisé, pour obtenir le code spécialisé. Le code spécialisé réalise, lorsqu'il est exécuté par le microprocesseur 2, la même fonction que si le code générique était interprété par l'interpréteur 30, mais en exécutant moins d'instructions. Par exemple, si l'on spécialise le paramètre pf1 de la fonction f avec la valeur spécifique « 2 », on obtient un code spécialisé, noté Sf-2,pf2, qui réalise, lorsqu'il est exécuté par le microprocesseur 2, exactement la même fonction f(2,pf2) que celle qui serait réalisée en interprétant le code générique de la fonction f dans le cas où la valeur du paramètre pf1 est égale à « 2 ».

Par la suite, on utilise la notation suivante pour désigner un code spécialisé « Sb-a1,a2, ..,an », où :
- « S » indique qu'il s'agit d'un code spécialisé.
- « b » est l'identifiant du code générique spécialisé. Dans cet exemple, b prend soit la valeur f pour identifier la fonction f soit la valeur g pour identifier la fonction g.
- «a1, a2, ..., an» est la liste des paramètres de la fonction classés dans l'ordre où ils apparaissent en tant qu'arguments de la fonction. Si le paramètre « ai » a été spécialisé, il est remplacé par sa valeur spécifique. S'il n'a pas été spécialisé, il est remplacé par le nom de son paramètre.

Par exemple, la notation Sg-2,3,pg3 désigne le code spécialisé de la fonction g obtenu en spécialisant les paramètres pg1 et pg2 avec, respectivement, les valeurs spécifiques 2 et 3 et dans lequel le paramètre pg3 n'a pas été spécialisé.

Le coût d'exécution du code Sf-2,pf2 est inférieur au coût d'interprétation du code générique de la fonction f(2, pf2). Par exemple, le nombre d'instructions du code Sf-2,pf2 est inférieur au nombre d'instructions exécutées par le microprocesseur 2 lorsque le code générique de cette fonction f(2, pf2) est interprété. En effet, puisque la valeur du paramètre pf1 est connue lors de la compilation du code générique, le générateur 32 traite ce paramètre non plus comme une variable, mais comme une constante, et cela permet d'optimiser le code spécialisé généré. Pour cela, le générateur 32 met en oeuvre au moins l'une des deux optimisations suivantes. La première optimisation consiste à inclure la valeur du paramètre spécialisé directement dans le code spécialisé généré. La deuxième optimisation consiste à supprimer le paramètre spécialisé du code spécialisé.

La suppression d'un paramètre spécialisé est illustrée dans le cas particulier où le code générique comporte une opération : « *Si* pf1 ≤ 3 *Alors* faire l'action 1, *Sinon* faire l'action 2 ». Si la valeur spécifique du paramètre pf1 est égal à 2, le générateur 32 génère un code spécialisé comportant seulement l'opération : « faire action 1 ». Dans ce cas, les instructions de test de la valeur du paramètre pf1 sont omises et le paramètre pf1 n'apparaît plus à cet endroit dans le code spécialisé généré.

Que le paramètre pf1 ait été remplacé par une constante ou tout simplement supprimé du code spécialisé, dans tous les cas, le code spécialisé ne comporte plus d'instruction de lecture de sa valeur à une adresse mémoire située en dehors de la plage continue d'adresses où est enregistré le code spécialisé. A cause de cela, le code spécialisé peut comporter moins d'instructions que le code générique. De plus, les instructions de lecture de la valeur d'un paramètre en mémoire sont des instructions coûteuses en temps d'exécution. Ainsi, par exemple, le code spécialisé généré permet au microprocesseur 2 d'exécuter plus rapidement la fonction f que s'il devait pour cela interpréter le code générique de cette même fonction f.

Le gestionnaire 34 a pour fonction de gérer le flux d'exécution du programme 28. En particulier, comme cela sera décrit plus en détail plus loin, le gestionnaire 34 regroupe les routines suivantes :
- un générateur 35 d'une routine 36 de recherche dans une table 38 de l'adresse d'un code spécialisé,
- une routine 40 de collecte de données statistiques, et
- une routine 42 de gestion de la mémoire 20.

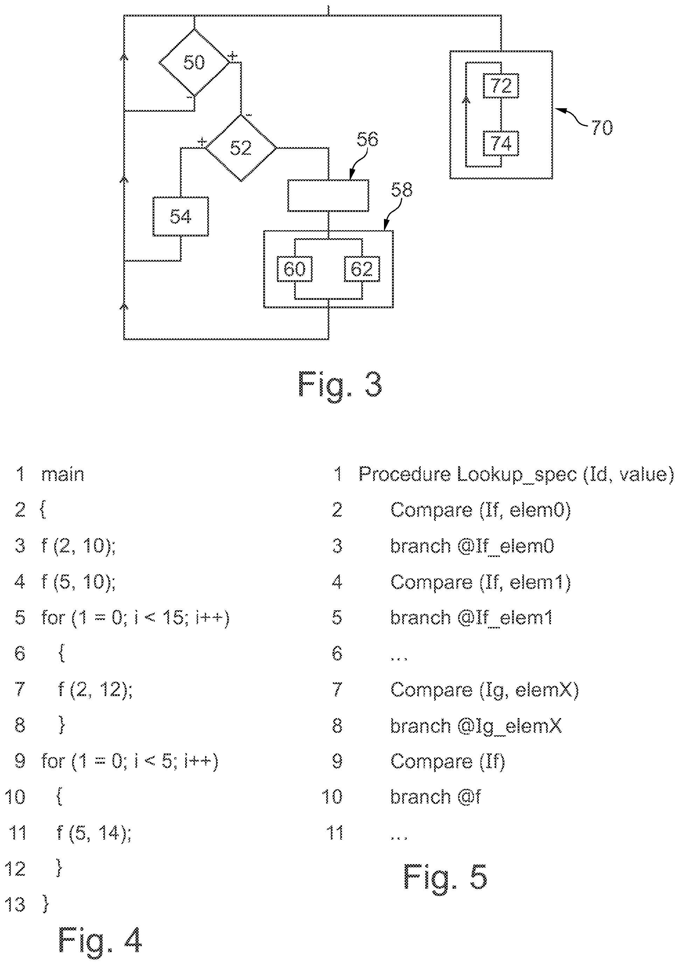

La figure 2 est une illustration schématique de la table 38 et de son contenu sous la forme d'un tableau de colonnes et de lignes. L'homme du métier comprend que cette représentation de la table 38 est une vue de l'esprit qui simplifie les explications et qu'il existe un très grand nombre de possibilités pour enregistrer dans la mémoire 20 une telle table. Par contre, quelle que soit la possibilité choisie pour enregistrer la table 38 dans la mémoire 20, celle-ci permet de reconstruire une représentation de cette table sous la forme d'un tableau comme illustré sur la figure 2. Ainsi, la table 38 correspond à une zone de la mémoire 20 dans laquelle sont enregistrées les informations représentées sous la forme d'un tableau dans la figure 2. Dans un premier temps, les explications sur le fonctionnement de l'unité centrale 1 sont données en utilisant la représentation de la table 38 sous la forme d'un tableau. Ensuite, en référence à la figure 5, un exemple de codage de la routine 36 de recherche dans la table 38 est décrit.

La table 38 comporte ici sept colonnes et une ligne par code spécialisé enregistré dans la mémoire 20. La première colonne comporte l'identifiant du code générique de la fonction spécialisée. Ici, les identifiants des fonctions f et g sont notées, respectivement, If et Ig. Par exemple, l'adresse où a été enregistré le code générique de la fonction est utilisée en tant qu'identifiant de ce code générique. Cet identifiant est indépendant des valeurs des paramètres de cette fonction. La deuxième colonne comporte l'identifiant des paramètres de la fonction qui ont été spécialisés. Ce mode de réalisation est décrit dans le cas particulier où les paramètres spécialisés sont des paramètres explicites de la fonction, c'est-à-dire les arguments de cette fonction. Ce qui est décrit par la suite dans ce cas particulier des paramètres explicites, s'applique à l'identique aux paramètres implicites des fonctions paramétrées. De plus, on suppose que les paramètres sont toujours spécialisés dans l'ordre où ils apparaissent en tant qu'argument dans la fonction. Ainsi, le premier paramètre pf1 est toujours spécialisé avant le paramètre pf2. Dès lors, le générateur 32 peut générer les codes spécialisés Sf-0,pf2 et Sf-0,2. Par contre, le code spécialisé Sf-pf1,0 , où seul le paramètre pf2 est spécialisé ne peut pas être généré, puisque le paramètre pf1 apparaît, dans l'ordre des arguments de la fonction f, avant le paramètre pf2. Avec ces hypothèses, le nombre de paramètres spécialisés de la fonction est suffisant pour identifier sans ambiguïté les paramètres spécialisés. Dans le cas présent, le nombre « 1 » est systématiquement ajouté au nombre de paramètres spécialisés. Grâce à cela, le nombre contenu dans la deuxième colonne repère en plus la fin de la ligne.

La troisième colonne contient l'adresse dans la mémoire 22 où est enregistré le code spécialisé. Ici, cette adresse pointe sur la première instruction du code spécialisé enregistré dans la mémoire 22. Pour les adresses, on utilise la même notation que pour les codes spécialisés sauf que la lettre « S » est remplacée par le symbole « @ ». Sur la figure 2, les symboles « V0 » à « V5 » représentent des valeurs spécifiques.

Les quatrième, cinquième, sixième et septième colonnes sont destinées à contenir les valeurs spécifiques des paramètres spécialisés. Dans le cas particulier représenté ici, seuls deux paramètres de la fonction f ont été spécialisés, et seul un paramètre de la fonction g l'a été. Ainsi, les sixième et septième colonnes sont vides. De plus, les cellules de la cinquième colonne associées aux codes spécialisés Sg-V5,pg2,pg3 et Sg-V0,pg2,pg3 sont aussi vides, car la fonction g n'a été spécialisée que pour les valeurs V5 et V0 de son premier paramètre pg1. Sur la figure 2, la ligne ondulée indique que seule une partie du contenu de la table 38 a été représentée. Bien entendu, la table 38 peut contenir des colonnes supplémentaires si plus de quatre paramètres d'une fonction sont spécialisés.

Le procédé d'exécution du programme 28 va maintenant être décrit en référence à la figure 3. Initialement, lors d'une étape 50, le microprocesseur 2 commence par exécuter l'interpréteur 30 L'interprétation consiste à exécuter la routine en langage machine correspondant à chaque instruction bytecode du programme en balayant les unes après les autres les opérations en Bytecode du programme 28. Ainsi, l'étape 50 est réitérée pour l'opération suivante du programme 28. Lors de ces réitérations de l'étape 50, le microprocesseur 2 obtient d'abord les valeurs de chaque paramètre d'une fonction paramétrée avant de l'appeler avec les valeurs ainsi obtenues. L'appel de la fonction se matérialise par un branchement vers l'adresse où est enregistré le code générique de cette fonction. L'adresse vers laquelle l'exécution du programme 28 est déroutée est nécessairement l'adresse du code générique de la fonction, étant donné que le programme 28 ne connaît pas et ne gère pas l'exécution de code spécialisé.

Un branchement est un saut qui déroute l'exécution du programme vers une autre instruction que l'instruction immédiatement suivante dans la mémoire 18 ou 22. Par exemple, pour cela, la valeur du compteur ordinale est changée pour que le pointeur d'instruction du microprocesseur 2 pointe vers une autre instruction que l'instruction suivante.

Dès qu'un branchement vers l'adresse d'une fonction doit être exécuté, lors d'une étape 52, la routine 36 de recherche est exécutée. L'exécution d'un tel branchement correspond à l'appel d'une fonction avec les valeurs des paramètres obtenues lors de l'exécution de l'étape 50.

Lors de l'étape 52, le microprocesseur 2 recherche dans la table 38 s'il existe un code spécialisé apte à réaliser la fonction appelée lorsqu'il est exécuté. Pour cela, le microprocesseur 2 balaie, dans l'ordre, les lignes de la table 38 en partant de la première ligne et en allant vers la dernière ligne. Ainsi, il réalise les opérations suivantes :
a) il sélectionne une ligne de la table 38, puis
b) il lit l'identifiant du code générique contenu dans la première cellule de cette ligne, puis
c) il compare l'identifiant du code générique lu à l'adresse du code générique appelé,
d) si l'identifiant du code générique lu n'est pas égal à l'adresse du code générique appelé, le microprocesseur exécute à nouveau les opérations a) à c), mais pour la ligne suivante de la table 38,
e) si l'identifiant du code générique lu lors de l'opération b) est égal à l'adresse du code générique appelé, le microprocesseur 2 lit l'identifiant des paramètres spécialisés contenus dans la deuxième cellule de cette ligne. Ici, cette identifiant des paramètres spécialisés est un nombre entier positif noté n. Ensuite, le microprocesseur 2 exécute le pseudo-code suivant :
   Pour i allant de 4 à n+2 :
      Si T[L,i] est différent de la valeur du i-ième paramètre obtenue lors de l'exécution de l'étape 50, Alors sortir de la boucle et exécuter à nouveau les opérations a) à c) pour la ligne suivante de la table 38.
   Fin pour.

Dans le pseudo-code ci-dessus, T[L,i] est le contenu de la cellule de la table 38 située à l'intersection de la ligne n° L sélectionnée lors de l'opération a) et de la colonne i. Ici, la numérotation des colonnes de la table 38 commence avec le chiffre 1.

Si la boucle « Pour... Fin pour » du pseudo-code ci-dessus s'exécute jusqu'à la fin, cela signifie que les valeurs spécifiques de tous les paramètres spécialisés sont égaux aux valeurs des paramètres de la fonction appelée. Il existe donc un code spécialisé capable de réaliser exactement la même fonction que le code générique appelé avec les valeurs des paramètres obtenus lors de l'étape 50.

Dans ce cas, lors d'une étape 54, le microprocesseur 2 déclenche l'exécution du code spécialisé dont l'adresse est contenue dans la troisième cellule de la ligne sélectionnée lors de la dernière exécution de l'opération a) de l'étape 52.

On notera que lorsque l'étape 54 est exécutée, il n'est pas nécessaire d'interpréter ou de compiler le code générique de la fonction, ce qui constitue déjà un gain de temps substantiel. De plus, comme expliqué précédemment, le code spécialisé s'exécute aussi plus rapidement que le code générique, car, par exemple, il n'a pas besoin d'aller lire les valeurs de tous les paramètres de la fonction avant de les traiter. Ainsi, l'exécution du code spécialisé accélère substantiellement la réalisation de la fonction par le microprocesseur 2. À la fin de l'exécution du code spécialisé, le microprocesseur retourne à l'étape 50 et reprend l'interprétation du programme 28 à l'opération suivante.

Si à l'issue de l'étape 52, aucun code spécialisé n'a été trouvé dans la table 38, le microprocesseur 2 exécute une étape 56 de collecte de données statistiques. Pour cela la routine 40 est exécutée par le microprocesseur 2. Lors de cette étape 56, le microprocesseur 2 collecte et mémorise des données statistiques sur l'exécution des fonctions paramétrées du programme 28. Ces données statistiques sont destinées à être utilisées pour décider si oui ou non un code spécialisé doit être généré.

L'étape 56 va maintenant être décrite plus en détail dans le cas particulier de la fonction paramétrée f. Toutefois, les explications données dans ce cas particulier se transposent sans difficulté, pour l'homme du métier, à toute autre fonction paramétrée du programme 28 telle que la fonction g.

A chaque fois que l'étape 56 est exécutée pour la fonction f avec les valeurs spécifiques Vx et Vy pour, respectivement, les paramètres pf1 et pf2 de cette fonction, le microprocesseur 2 met à jour la valeur d'un compteur Cf-Vx,pf2 et un compteur Cf-Vx,Vy. Ici, la mise à jour consiste à incrémenter d'un pas prédéterminé les valeurs de ces compteurs. Les valeurs Vx et Vy des paramètres pf1 et pf2 sont celles obtenues lors de la précédente itération de l'étape 50. La notation utilisée ici pour désigner les compteurs est la même que celle utilisée pour désigner les codes spécialisés sauf que la lettre « S » est remplacée par la lettre « C ». Le pas prédéterminé est, par exemple, égal à un.

Ainsi, il existe un compteur Cf-Vx,pf2 associé à chaque valeur Vx différente obtenue lors de l'exécution du programme 28 et pour laquelle il n'existe pas déjà un code spécialisé de la fonction f. Il existe également autant de compteurs Cf-Vx,Vy que de couples de valeurs Vx,Vy différents obtenus lors de l'exécution du programme 28 et pour lesquels il n'existe pas déjà de code spécialisé de la fonction f.

On rappelle aussi ici que par hypothèse, dans ce mode de réalisation, les paramètres sont uniquement spécialisés dans leur ordre d'apparition comme argument de la fonction f. Ainsi, la spécialisation du paramètre pf2 sans spécialiser le paramètre pf1 est rendue impossible. Dès lors, il n'est pas nécessaire de collecter des données statistiques sur les valeurs du paramètre pf2 indépendamment des valeurs du paramètre pf1. Les compteurs Cf-pf1,Vy ne sont donc pas utilisés dans ce mode de réalisation.

Les compteurs Cf-Vx,pf2 et Cf-Vx,Vy sont créés et initialisés à zéro lorsque l'étape 56 est exécutée pour la première fois avec les valeurs Vx et Vy des paramètres pf1 et pf2.

Une fois l'étape 56 terminée, le microprocesseur 2 procède à une étape 58 où il utilise le code générique de la fonction pour réaliser cette fonction et non pas un code spécialisé pré-existant enregistré dans la mémoire 22. Dans ce mode de réalisation, il existe deux alternatives pour réaliser l'étape 58. La première alternative consiste à générer à partir du code générique de la fonction, un code spécialisé qui n'a pas été trouvé dans la table 38 lors de l'étape 52, puis à stocker son adresse dans la table 38 et à exécuter ce code spécialisé. La deuxième alternative consiste à interpréter le code générique de la fonction à l'aide de l'interpréteur 30. La première alternative peut s'avérer plus coûteuse que la deuxième alternative. Par la suite, dans ce mode de réalisation, le coût correspond au temps d'exécution. Par exemple, le temps nécessaire pour réaliser la fonction selon la première alternative peut s'avérer plus long que le temps nécessaire pour réaliser la même fonction, mais en mettant en oeuvre la deuxième alternative. En effet, dans le cas de la première alternative, il faut ajouter au temps d'exécution du code spécialisé, le temps nécessaire pour générer ce code spécialisé. Toutefois, même si le temps d'exécution de la première alternative est plus long que celui de la deuxième alternative, il peut être intéressant de quand même mettre en oeuvre cette première alternative si le code spécialisé généré peut être réutilisé plusieurs fois lors d'exécutions ultérieures de cette même fonction. En effet, lors des exécutions ultérieures du code spécialisé, le temps mis pour générer ce code spécialisé n'est plus à prendre en compte puisqu'il est présent dans la mémoire 22. Cela fait donc, généralement, gagner du temps par rapport à l'interprétation du code générique de la fonction. Ici, pour choisir entre la première et la deuxième alternatives, le gestionnaire 34 est exécuté afin de minimiser autant que possible le coût choisi, c'est-à-dire ici le temps d'exécution du programme 28.

Plus précisément, dans ce mode de réalisation, la première alternative est exécutée dès qu'une condition prédéterminée est vérifiée. La condition est ici le franchissement d'un seuil pré-calculé par la valeur d'un compteur.

Par exemple, chaque compteur incrémenté est comparé à un seuil pré-calculé qui lui est associé. Par la suite, on utilise la même notation pour les seuils pré-calculés que celle définie pour les codes spécialisés, sauf que la lettre « S » est remplacée par la lettre « N ». Ainsi, les seuils associés aux compteurs Cf-Vx,pf2 et Cf-Vx,Vy sont notés, respectivement, Nf-Vx,pf2 et Nf-Vx,Vy.

Ici, cette comparaison est réalisée en commençant d'abord par les compteurs associés au plus grand nombre de paramètres spécialisés et en allant vers les compteurs associés au plus petit nombre de paramètres spécialisés. Ainsi, le microprocesseur 2 compare systématiquement d'abord la valeur du compteur Cf-Vx,Vy au seuil Nf-Vx,Vy, puis la valeur du compteur Cf-Vx,pf2 au seuil Nf-Vx,pf2. Grâce à cela, comme décrit plus loin, cela permet de classer les lignes de la table 38 dans un ordre qui empêche l'apparition de conflits.

Dès que la valeur d'un compteur dépasse le seuil qui lui est associé, le microprocesseur 2 met en oeuvre la première alternative lors d'une opération 60 de génération d'un code spécialisé puis d'exécution de ce code spécialisé. Dans le cas contraire, c'est-à-dire si aucun des compteurs incrémentés n'a dépassé le seuil qui lui est associé, le microprocesseur 2 met en oeuvre, lors d'une opération 62, la deuxième alternative.

Ainsi, lors de l'opération 60, le générateur 32 est exécuté pour générer un code spécialisé avec les valeurs spécifiques des paramètres associés au compteur qui a franchi le seuil qui lui est associé.

Par exemple, si la valeur du compteur Cf-Vx,Vy dépasse le seuil Nf-Vx,Vy, alors le générateur 32 génère le code Sf-Vx,Vy de la fonction f avec les valeurs spécifiques Vx et Vy pour, respectivement, les paramètres pf1 et pf2. Ensuite, seul le compteur Cf-Vx,Vy est supprimé. Dès lors puisque le compteur Cf-Vx,pf2 subsiste, plus tard au cours de l'exécution du programme 28, ce compteur Cf-Vx,pf2 peut dépasser le seuil Nf-Vx,pf2. Si c'est le cas, alors le générateur 32 génère le code spécialisé Sf-Vx,pf2. Par contre, quand le générateur 32 génère le code Sf-Vx,pf2, il supprime à la fois les compteurs Cf-Vx,pf2 et tous les compteurs Cf-Vx,Y, où Y est une valeur spécifique quelconque. En effet, dès que le générateur 32 génère le code spécialisé Sf-Vx,pf2, ensuite il ne doit plus générer un code spécialisé Sf-Vx,Y. Cela est dû au fait que lors de l'étape 52, les lignes de la table 38 sont balayées dans l'ordre en partant de la première ligne vers la dernière ligne. Si le code Sf-Vx,pf2 est généré avant le code Sf-Vx,Vy, l'adresse @f-Vx,pf2 se trouve systématiquement sur une ligne située avant la ligne qui pourrait contenir l'adresse @f-Vx,Vy. Dès lors, quand la fonction f est appelée avec les valeurs Vx et Vy, c'est l'adresse @f-Vx,pf2 qui est systématiquement trouvée en premier et donc le code spécialisé Sf-Vx,pf2 qui est systématiquement exécuté. Ainsi, même si le code Sf-Vx,Vy avait été généré après le code Sf-Vx,pf2, dans ce mode de réalisation, il ne serait quasiment jamais exécuté.

De plus, cette façon de procéder permet de résoudre simplement le conflit qui pourrait survenir si :
- le microprocesseur 2 générait à la fois les codes spécialisés Sf-Vx,pf2 et Sf-Vx,Vy, et
- lors de l'étape 52, le microprocesseur 2 balayait systématiquement toutes les lignes de la table 38.

Dans ce cas, lorsque la fonction f est appelée avec les valeurs Vx et Vy des paramètres pf1 et pf2, le microprocesseur 2 identifierait dans la table 38 deux codes spécialisés Sf-Vx,pf2 et Sf-Vx,Vy susceptibles d'être exécutés pour réaliser la fonction f. Il faudrait donc en plus implémenter une règle permettant au microprocesseur 2 de choisir automatiquement lequel de ces deux codes spécialisés doit être exécuté.

Après avoir généré le code spécialisé, le microprocesseur 2 l'enregistre dans la mémoire 22. Pour cela, le microprocesseur 2 exécute la routine 42 qui réalise les opérations suivantes :
g) La routine 42 examine s'il existe un espace libre de taille suffisante dans la mémoire 22 pour contenir le code spécialisé généré.
h) Dans l'affirmative, le microprocesseur 2 enregistre alors le code spécialisé généré dans une plage continue d'adresses à l'intérieur de cet espace libre.
i) Ensuite, le microprocesseur 2 met à jour la table 38. Plus précisément, le microprocesseur 2 ajoute une nouvelle ligne contenant l'identifiant du code générique, l'identifiant des paramètres spécialisés pour générer ce code spécialisé, l'adresse où débute la plage continue d'adresses où est enregistré ce code spécialisé dans la mémoire 22, et les valeurs spécifiques des paramètres spécialisés. Cette nouvelle ligne est ajoutée juste après la dernière ligne de la table 38.
j) S'il n'existe pas d'espace libre suffisamment grand pour contenir le code spécialisé généré dans la mémoire 22, le microprocesseur 2 commence par supprimer le code spécialisé le plus ancien, c'est-à-dire celui enregistré dans la plage d'adresses qui débute à l'adresse contenue dans la première ligne de la table 38. Cette première ligne de la table 38 est aussi supprimée, de sorte que c'est la seconde ligne de cette table 38 qui devient maintenant la première ligne. Ensuite, il exécute à nouveau les opérations g) à j).

Cette manière de gérer la mémoire 22 permet de minimiser sa taille. De plus, dans ce mode de réalisation, à chaque fois que la table 38 est modifiée, le microprocesseur exécute le générateur 35 pour générer une nouvelle routine 36, écrite dans le langage machine du microprocesseur 2 et l'enregistre à la place de la précédente routine 36. Cette opération est décrite plus en détail en référence à la figure 5.

A la fin de l'opération 60, le microprocesseur 2 exécute le code spécialisé généré pour réaliser la fonction souhaitée.

Lors de l'opération 62, le microprocesseur 2 exécute l'interpréteur 30 pour interpréter le code générique de la fonction. Dans ce cas, les valeurs de tous les paramètres sont traitées comme des variables et ces valeurs doivent donc être lues en mémoire en dehors de la plage d'adresses où est enregistré le code générique avant d'être traité par l'interpréteur 30.

Une fois que l'opération 60 ou 62 a été exécuté, l'étape 58 est terminée et le microprocesseur retourne à l'étape 50 pour exécuter l'opération suivante du programme 28.

En parallèle des étapes précédemment décrites, lors d'une phase 70, le microprocesseur 2 calcule et met à jour dynamiquement chaque seuil associé à un compteur. Plus précisément, le microprocesseur calcule, lors d'une étape 72, chaque seuil à partir d'un rapport Kgen/[Klib-Kdyn]. Dans ce mode de réalisation, chaque coût Kgen, Klib et Kdyn est obtenu uniquement à partir de données concernant la même fonction paramétrée et les mêmes valeurs spécifiques que celles associées au compteur pour lequel ce seuil est calculé. Dès lors, les coûts Kgen, Klib et Kdyn sont spécifiques à chaque compteur. Dans ce mode de réalisation, pour faire ressortir cette spécificité, les coûts Kgen, Klib et Kdyn sont suivis, entre parenthèse, d'un identifiant du compteur auquel ils sont associés.

Le calcul d'un seuil est maintenant décrit dans le cas particulier du seuil Nf-Vx,Vy associé au compteur Cf-Vx,Vy. L'homme du métier sait adapter cette enseignement au calcul des seuils de tous les autres compteurs précédemment décrits. Ici, le seuil Nf-Vx,Vy est calculé à l'aide de la formule suivante : Nf-Vx,Vy = Kgen(f-Vx,Vy) / [Klib(f-Vx,Vy) - Kdyn(f-Vx,Vy)], où :
- Kgen(f-Vx,Vy) est le coût de génération du code spécialisé Sf-Vx,Vy.
- Klib(f-Vx,Vy) est le coût de réalisation de la fonction f sans utiliser le code spécialisé, et
- Kdyn(f-Vx,Vy)] est le coût de réalisation de la fonction f en exécutant le code spécialisé Sf-Vx,Vy.

Ici, le coût est le temps d'exécution. Ainsi, le coût Kgen(f-Vx,Vy) est égal au temps nécessaire pour que le microprocesseur 2 génère le code spécialisé Sf-Vx,Vy. Le coût Klib(f-Vx,Vy) est égal au temps mis par le microprocesseur 2 pour interpréter le code générique de la fonction f avec les valeurs Vx et Vy pour les paramètres pf1 et pf2. Le coût Kdyn(f-Vx,Vy) est le temps mis par le microprocesseur 2 pour exécuter le code spécialisé Sf-Vx,Vy lors de l'étape 54.

L'étape 72 est exécutée une première fois avant la première utilisation, lors de l'étape 58, du seuil Nf-Vx,Vy. Lors de cette première exécution de l'étape 72, les coûts Kgen(f-Vx,Vy), Klib(f-Vx,Vy) et Kdyn(f-Vx,Vy) sont initialisés à partir de valeurs pré-enregistrées dans la mémoire 20.

Ensuite, lors d'une étape 74, le microprocesseur 2 mesure et met à jour les coûts. Par exemple, à chaque fois que le code spécialisé Sf-Vx,Vy est généré, le microprocesseur 2 acquiert une mesure du temps mis pour générer ce code spécialisé et l'enregistre dans la mémoire 20 à la place de la précédente valeur du coût Kgen(f-Vx,Vy). Ici, par exemple, le microprocesseur 2 mesure le temps mis pour exécuter une tâche en déclenchant une minuterie juste avant de débuter l'exécution de cette tâche. Ensuite, il relève la valeur de cette minuterie juste après la fin de l'exécution de cette tâche. La valeur relevée est considérée comme étant le temps mis pour exécuter cette tâche.

De même, à chaque fois que l'opération 62 est exécutée pour la fonction f avec les valeurs Vx, Vy des paramètres pf1 et pf2, le temps mis pour réaliser l'opération 62 est mesuré puis enregistré dans la mémoire 20 à la place de la précédente valeur du coût Klib(f-Vx,Vy).

Enfin, à chaque fois que le code spécialisé Sf-Vx,Vy est exécuté lors de l'étape 54 ou de l'étape 60, le temps mis pour exécuter cette étape est mesuré puis enregistré dans la mémoire 20 à la place de la précédente valeur du coût Kdyn(f-Vx, Vy). Après chaque mise à jour d'un des coûts Kgen(f-Vx,Vy), Klib(f-Vx,Vy) et Kdyn(f-Vx,Vy), l'étape 72 est de nouveau exécutée. On rappelle ici que lors d'une même exécution du programme 28, le code spécialisé Sf-Vx,Vy peut être généré plusieurs fois car, comme décrit précédemment, le code spécialisé peut être effacé de temps en temps de la mémoire 22 pour libérer de la place pour d'autres codes spécialisés.

On remarque que la formule ci-dessus conduit à une valeur du seuil Nf-Vx,Vy strictement inférieure à un si le cumul du temps de génération du code spécialisé Sf-Vx,Vy et du temps d'exécution de ce code spécialisé est strictement inférieur au temps d'interprétation du code générique de la fonction f avec les valeurs Vx, Vy des paramètres pf1 et pf2. Dans ce cas, le code spécialisé Sf-Vx,Vy est généré dès le premier appel de la fonction f avec les valeurs Vx,Vy.

Dans les autres cas, la valeur du seuil Nf-Vx,Vy sera d'autant plus grande qu'il sera difficile d'amortir la génération du code spécialisé Sf-Vx,Vy. Typiquement, amortir la génération d'un code spécialisé est difficile si l'écart entre le coût d'exécution de l'opération 62 et de l'étape 54 pour la même fonction avec les mêmes valeurs de paramètres est petit, ou si le coût Kgen de génération du code spécialisé est grand. Si le temps d'exécution du code spécialisé Sf-Vx,Vy est plus long que le temps d'interprétation du code générique avec les valeurs Vx, Vy des paramètres, alors la valeur du seuil Nf-Vx,Vy est négative. Dans ce cas, le microprocesseur 2 inhibe systématiquement la génération du code spécialisé Sf-Vx,Vy.

Ce qui a été décrit ci-dessus pour le calcul du seuil Nf-Vx,Vy est appliqué à l'identique pour tous les autres seuils en remplaçant dans les explications ci-dessus le symbole « f-Vx,Vy » par l'identifiant de la fonction et des valeurs spécifiques des paramètres spécialisés associés à ce compteur. Ainsi, la valeur du seuil Nf-Vx,pf2 est calculée et mise à jour comme décrit ci-dessus mais en utilisant la formule suivante : Nf-Vx,pf2 = Kgen(f-Vx,pf2)/[Klib(f-Vx,pf2) - Kdyn(f-Vx,pf2)] où Kgen(f-Vx,pf2), Klib(f-Vx,pf2) et Kdyn(f-Vx,pf2) sont les mêmes que respectivement les coûts Kgen(f-Vx,Vy), Klib(f-Vx,Vy) et Kdyn(f-Vx,Vy) mais pour la fonction f avec la valeur Vx pour le paramètre pf1 et une valeur quelconque pour le paramètre pf2.

Le fonctionnement du procédé de la figure 3 est maintenant illustré dans le cas particulier du pseudo-code représenté sur la figure 4. Sur cette figure et sur la figure 5, les numéros à gauche sont les numéros de ligne. On suppose que les seuils Nf-2,pf2 ; Nf-5,pf2 ; Nf-2,10 ; Nf-2,12 ; Nf-5,20 et Nf-5,14 sont tous égaux à deux. Lors du premier appel de la fonction f, à la ligne 3, les compteurs Cf-2,pf2 et Cf-2,10 sont créés puis incrémentés de un. A ce stade, leur valeur est donc égale à un. La fonction f(2, 10) est réalisée en interprétant le code générique de cette fonction.

Lors du deuxième appel à la fonction f, à la ligne 4, les compteurs Cf-5,pf2 et Cf-5,10 sont créés puis incrémentés de un. Ils sont donc maintenant tous les deux égaux à un. Ensuite, la fonction f(5, 10) est réalisée en interprétant le code générique de cette fonction.

Lors de la première itération de la boucle comprise entre les lignes 5 et 8, les compteurs Cf-2,pf2 et Cf-2,12 sont incrémentés de 1 et la fonction f(2, 12) est réalisée en interprétant le code générique de la fonction f.

Lors de la deuxième itération de la boucle comprise entre les lignes 5 à 8, le compteur Cf-2,pf2 est incrémenté et dépasse le seuil Nf-2,pf2. Le code spécialisé Sf-2,pf2 est donc généré et les compteurs Cf-2,10, Cf-2,12 et Cf-2,pf2 sont supprimés. La table 38 est mise à jour pour ajouter la ligne qui contient l'adresse @f-2,pf2 où est enregistré le code spécialisé Sf-2,pf2 dans la mémoire 22. Enfin, la fonction f(2, 12) est réalisée en exécutant le code spécialisé Sf-2,pf2.

A partir de la troisième jusqu'à la quinzième itération de la boucle comprise entre les lignes 5 à 8, c'est le code spécialisé Sf-2,pf2 qui est exécuté pour réaliser la fonction f(2, 12).

Lors de la première itération de la boucle comprise entre les lignes 9 à 12, le compteur Cf-5,pf2 est incrémenté et le compteur Cf-5,14 est créé et incrémenté aussi. A ce stade, la valeur du compteur Cf-5,pf2 est égal à deux et la valeur du compteur Cf-5,14 est égale à un.

Lors de la deuxième itération de la boucle comprise entre les lignes 9 à 12, le compteur Cf-5,pf2 dépasse le seuil Nf-5,pf2. Le code spécialisé Sf-5,pf2 est donc généré et les compteurs Cf-5,pf2, Cf-5,20 et Cf-5,14 sont supprimés. La table 38 est mise à jour pour ajouter la ligne qui contient l'adresse @f-5,pf2. Enfin, la fonction f(5,14) est réalisée en exécutant le code spécialisé Sf-5,pf2. A partir de la troisième jusqu'à la quinzième itération de la boucle comprise entre les lignes 9 à 12, c'est le code spécialisé Sf-5,pf2 qui est exécuté pour réaliser la fonction f(5,14).

La figure 5 représente une partie du code de la routine 36 de recherche généré lors de l'opération 60 du procédé de la figure 3. La routine 36 est générée à partir du contenu mis à jour de la table 38. Dans la figure 5, la routine de recherche 36 s'appelle « Lookup-spec ». Aux lignes 6 et 11, le symbole « ... » indique simplement qu'une partie du code de la routine 36 n'a pas été représentée. Ces parties non représentées se déduisent sans difficulté des explications qui suivent.

La routine 36 présente deux caractéristiques qui accélèrent son exécution par le microprocesseur 2. Premièrement, le contenu de la table 38 est codé en tant que constante à l'intérieur du code de cette routine 36. Ainsi, lors de l'exécution de la routine 36, il n'est pas nécessaire d'aller lire le contenu de la table 38 à des adresses situées en dehors de la plage continue d'adresses où est enregistré le code de cette routine 36. Deuxièmement, plutôt que de renvoyer l'adresse du code spécialisé recherché ou, si aucun code spécialisé n'a été trouvé une valeur par défaut, la routine 36 comporte des branchements qui déclenchent directement l'exécution du code spécialisé trouvé et, sinon, du code générique. Sur la figure 5, ces branchements sont représentés par l'instruction « branch » suivie soit de l'adresse d'un code spécialisé, soit de l'adresse @f qui déclenche la réalisation de la fonction f à l'aide du code générique. Ainsi, on évite d'avoir à stocker l'adresse du code spécialisé trouvé dans une variable, ce qui accélère l'exécution du programme 28.

Dans le pseudo-code représenté dans la figure 5, le symbole « Id » désigne l'identifiant du code générique de la fonction appelée. Le symbole « Value » désigne une variable qui contient les valeurs des différents paramètres de la fonction appelée obtenues lors de l'étape 50. L'instruction « Compare (If, elem0) » compare l'identifiant de la fonction If à l'identifiant Id et les valeurs des paramètres spécialisés contenus dans la constante elem0 aux valeurs correspondantes contenues dans la variable Value. Dans le cas où il y a une différence entre If, elem0 et Id, Value, l'instruction « Compare » se poursuit par l'exécution de l'instruction qui se trouve deux lignes en dessous. Dans le cas contraire, c'est-à-dire si les éléments If et elem0 sont égaux à, respectivement, l'identifiant Id et l'élément Value, alors l'instruction située à la ligne immédiatement en dessous est exécutée. Dans le cas décrit ici, il s'agit de l'instruction « branch @If-elem0 » qui redirige directement l'exécution du programme 28 vers l'adresse @If-elem0. Par exemple, pour cela, l'adresse @If-elem0 est placée dans le compteur ordinal associé à l'unité arithmétique et logique 4. Les instructions « Compare » et « branch » situées aux lignes suivantes fonctionnent comme décrit précédemment sauf qu'elles ne comparent pas les valeurs Id et Value aux mêmes éléments de la table 38 et ne redirigent pas l'exécution du programme 28 vers la même adresse de code spécialisé.

Si la fonction appelée est la fonction f mais qu'elle est appelée avec des valeurs obtenues pour les paramètres qui ne correspondent à aucun de ceux enregistrés dans la table 38, l'instruction « branch @f » est exécutée. L'exécution de cette instruction redirige l'exécution du programme 28 vers une adresse qui déclenche l'interprétation du code générique de la fonction f. Étant donné que le contenu de la table 38 est codé en tant que constante dans le code de la routine 36, à chaque fois que la table 38 est modifiée, la routine 36 doit de nouveau être générée. Toutefois, étant donné que, dans presque tous les cas, le nombre de fois où la routine 36 est appelée est très supérieur au nombre de fois où la table 38 est modifié, le temps perdu à générer la routine 36 décrite ci-dessus est compensé par le gain de temps dû au fait qu'elle s'exécute plus rapidement que si elle n'avait pas été spécialisée en fonction du contenu de la table 38.

De nombreux autres modes de réalisation du procédé d'exécution décrit ci-dessus sont possibles. Par exemple, le microprocesseur 2 est programmé pour identifier les paramètres implicites et relever leurs valeurs avant ou au cours de l'exécution de l'opération 62. Ensuite, les paramètres implicites ainsi relevés sont traités comme décrit pour les paramètres explicites. En particulier, les étapes 56 et 74 sont également exécutées pour ces paramètres implicites. De plus le générateur 32 est alors adapté pour traiter un paramètre implicite d'une fonction comme une constante et ainsi générer un code spécialisé qui est optimisé en prenant en compte la valeur spécifique de ce paramètre implicite.

En variante, l'interpréteur 30 peut être omis si le programme 28 à exécuter est directement écrit dans le langage machine du microprocesseur 2 et non pas en Bytecode. Dans cette variante, le programme 28 n'est donc plus un code indépendant des spécificités structurelles de l'unité centrale 1. Dans ce cas, le code générique des fonctions f et g est aussi écrit en langage machine et non pas en Bytecode. Toutefois, ces codes génériques, contrairement aux codes spécialisés, comportent pour chaque paramètre des instructions de lecture de la valeur de ce paramètre en dehors de la plage continue d'adresses où est enregistré le code générique de cette fonction. Dans ce cas, le générateur 32 conserve sa fonction d'optimisation du code générique en fonction de la valeur spécifique affecté au paramètre à spécialiser. Ainsi, tout ce qui a été décrit précédemment pour le générateur 32 dans le cas particulier d'un code générique écrit en Bytecode reste inchangé sauf que le générateur 32 compile le code générique écrit en langage machine en un code spécialisé écrit dans le même langage machine. Dans ce cas, le générateur 32 est connu sous le terme anglais de « dynamic optimizer ».

Dans une autre variante, le programme 28 est écrit dans un langage machine d'un autre microprocesseur différent du microprocesseur 2. Dans ce cas, le générateur 32 n'a pas à compiler le programme 28 mais doit traduire les instructions du programme 28 dans le langage machine du microprocesseur 2. Le générateur 32 est alors connu sous l'acronyme DBT (Dynamic binary translator). Comme précédemment, cette variante n'affecte que la fonction de compilateur du générateur 32 mais ne modifie en rien les fonctions d'optimisation qu'il doit réaliser pour générer le code spécialisé.

Ce qui a été décrit précédemment peut être mis en oeuvre avec tout type de langage de programmation. Par exemple, cela peut être mis en oeuvre avec le langage deGoal. En particulier, lors de l'opération 62, le code générique n'est pas nécessairement interprété. Par exemple, en variante, le code générique est un programme obtenu classiquement par un compilateur statique et se trouve dans la mémoire programme 18 avant le démarrage du programme.

Le code spécialisé n'a pas besoin d'être systématiquement généré à la volée lors de l'exécution du programme 28. En variante, lors de l'écriture du programme 28, le programmeur peut repérer des fonctions à spécialiser dans ce programme puis générer, avant même que l'exécution de ce programme commence, les codes spécialisés correspondants à l'aide, par exemple, du générateur 32. Ensuite, lors de l'installation du programme 28 dans l'unité centrale 1, les codes spécialisés générés en avance sont enregistrés dans la mémoire 18 en même temps que le programme 28. Au début de l'exécution du programme 28, le gestionnaire 34 met à jour la table 38 pour y inclure l'adresse des codes spécialisés pré-enregistrés dans la mémoire 18. Ainsi, dès que la fonction est appelée avec une valeur spécifique correspondant à celle utilisée pour générer l'un des codes spécialisés de cette fonction, le générateur 34 déclenche directement l'exécution du code spécialisé pré-enregistré sans qu'il soit nécessaire de faire appel, au moins lors de la première exécution, au générateur 32.

La mémoire 22 n'est pas nécessairement une mémoire volatile. En variante, elle est remplacée par une mémoire non volatile telle qu'une mémoire connue sous l'acronyme NVRAM (Non Volatile Random Access Memory).

L'identifiant d'une fonction dans la table 38 peut aussi être le nom de cette fonction. Dans une autre variante, l'identifiant de la fonction est obtenu en appliquant une fonction de hachage sur le code générique de cette fonction. Par contre, cet identifiant reste le même quelles que soient les valeurs obtenues pour les paramètres de cette fonction.

Si le gestionnaire 34 est programmé pour déclencher la spécialisation d'une seule fonction du programme 28, l'identifiant du code générique dans la table 38 peut être omis et la première colonne supprimée. Par exemple, le gestionnaire est programmé pour autoriser uniquement la spécialisation de la fonction f.

Si le gestionnaire 34 spécialise toujours les n premiers paramètres des fonctions paramétrées, où n est un entier constant supérieur ou égal à un, alors la seconde colonne comportant l'identifiant des paramètres spécialisés de la fonction peut être omise. Ce mode de réalisation simplifie aussi la routine 40 puisqu'il y a alors moins de compteurs à gérer.

Dans une autre variante, le gestionnaire 34 peut spécialiser n'importe quel paramètre d'une fonction et pas nécessairement dans l'ordre des arguments de cette fonction. Ainsi, par exemple, le générateur 32 peut générer à la fois les codes spécialisés Sf-0,pf2 et Sf-pf1,0. L'identifiant des paramètres spécialisés décrits en référence à la figure 2 ne permet pas de distinguer ces deux codes spécialisés. Ainsi, dans ce cas, par exemple, l'identifiant des paramètres spécialisés est remplacé par un autre identifiant de paramètres spécialisés comportant un masque de 3 bits ou plus. Dans ce masque la position du bit identifie le paramètre de la fonction et la valeur « 1 » du bit indique que ce paramètre a été spécialisé tandis que la valeur « 0 » de ce bit indique au contraire que ce paramètre n'a pas été spécialisé. Ainsi, l'identifiant des paramètres spécialisés des codes Sf-0,pf2 et Sf-pf1,0 sont respectivement [1;0] et [0 ;1]. Dans ce cas, la routine 40 doit aussi être modifiée pour collecter les données statistiques sur les valeurs de chacun de ces paramètres. Par exemple, dans le cas de la fonction f, lors de l'étape 56, un compteur supplémentaire Cf-pf1,Vy est utilisé. Ce compteur Cf-pf1,Vy est uniquement associé à la fonction f et également uniquement associé à la valeur Vy du paramètre pf2. Il est incrémenté à chaque fois que le paramètre pf2 prend la valeur Vy. Si la valeur de ce compteur Cf-pf1,Vy dépasse un seuil Nf-pf1,Vy, alors un code spécialisé Sf-pf1,Vy est généré en spécialisant seulement le paramètre pf2 avec la valeur Vy.

Une autre solution consiste à introduire dans la table 38 une colonne par paramètre et à enregistrer la valeur du paramètre utilisé pour générer le code spécialisé d'une fonction dans la seule colonne qui lui est associée. Dans ce cas, l'absence de valeur dans l'une de ces colonnes indique que le paramètre associé à cette colonne n'a pas été spécialisé.

D'autres modes de réalisation de la routine 36 de recherche sont possibles. Par exemple, dans le cas où un code spécialisé est trouvé, la routine 36 renvoie l'adresse de ce code spécialisé plutôt que de rediriger l'exécution du programme directement vers ce code spécialisé. Ensuite, l'adresse renvoyée par la routine 36 est utilisée pour exécuter un branchement vers cette adresse. Si aucun code spécialisé correspondant n'est trouvé dans la table 38, la routine 36 renvoie une valeur par défaut qui indique l'absence de code spécialisé dans la table 38 correspondant à la fonction recherchée. On notera cependant que cette variante suppose l'utilisation d'une variable supplémentaire pour stocker l'adresse, ou la valeur par défaut, renvoyée par la routine 36. Cette variante fonctionne correctement mais s'exécute donc moins rapidement que le mode de réalisation principal précédemment décrit.

Dans un autre mode de réalisation, la routine 36 n'est pas spécialisée en fonction du contenu de la table 38. Ainsi, le générateur 35 peut être omis. En effet, dans ce cas, il n'est pas nécessaire de générer une nouvelle routine 36 en langage machine à chaque fois que le contenu de la table 38 est modifié.

En variante, la routine 36 est modifiée pour parcourir systématiquement toutes les lignes de la table 38 et sélectionner une ou plusieurs lignes contenant des adresses de codes spécialisés capables de réaliser la fonction appelée lorsqu'ils sont exécutés. Dans ce cas, la routine 36 implémente également une règle de choix automatique du code spécialisé à exécuter parmi les différents codes spécialisés sélectionnés. Par exemple, la routine 36 est programmée pour sélectionner systématiquement l'adresse du code spécifique qui comporte le plus grand nombre de paramètres spécialisés. Dans cette variante, même si le code spécifique Sf-Vx,pf2 a été généré en premier, les compteurs Cf-Vx,Vy ne sont pas supprimés lors de l'étape 56 et l'étape 56 est systématiquement exécutée après l'étape 52 pour continuer à mettre à jour ces compteurs. Ainsi, même si le code spécialisé Sf-Vx,pf2 est généré en premier, il reste possible de générer ultérieurement d'autres codes spécialisés pour la même fonction f tels que le code Sf-Vx,Vy par exemple.

La routine 36 de recherche peut également être générée, en langage machine, par un autre microprocesseur puis, par exemple, être enregistrée dans la mémoire 22 avant le début de l'exécution du programme 28.

D'autres coûts d'exécution peuvent être pris en compte pour décider de déclencher la génération d'un code spécialisé. Par exemple, le coût pris en compte peut être la quantité d'une des grandeurs physiques suivantes ou d'une combinaison de ces grandeurs physiques : la consommation électrique, la puissance électrique consommée, le temps d'exécution, la température, le niveau de bruit électrique ou acoustique. Une combinaison souvent utilisée de ces grandeurs physiques est connue sous l'acronyme EDP (« energy-delay product »). L'EDP est égal au produit du temps d'exécution par l'énergie consommée.

De préférence, quelle que soit la grandeur physique choisie, le microprocesseur est équipé d'un capteur qui permet de mesurer la quantité de cette grandeur physique en temps réel. C'est alors ces quantités mesurées par ces capteurs qui sont utilisées pour actualiser les coûts Kgen, Klib et Kdyn.

La phase 70 peut être mise en oeuvre indépendamment de la méthode décrite pour sélectionner le code spécialisé à exécuter et, en particulier, de la structure de la table 38. Par exemple, la phase 70 peut avantageusement être implantée dans un procédé comme celui décrit dans la demande US 2010/0095284.

De nombreuses autres méthodes sont possibles pour mesurer le temps de génération du code spécialisé et d'exécution de ce code spécialisé. Par exemple, toutes les méthodes décrites au chapitre 3.1 de l'article suivant sont utilisables :
- M. Arnold et Al, « Adaptive optimization in the jalapeño JVM », ACM SIGPLAN Notices, vol. 46, n°4, pp 65-83, 2011.

Une autre méthode possible est décrite dans l'article suivant :
- D. Buytaert et Al, « Using HPM-Sampling to drive dynamic compilation », Proceeding of the conférence on object-oriented programming systems, languages and applications, OOPSLA, pp 553-567, 2007.

Enfin, une autre méthode pour mesurer le temps de génération du code spécialisé et de réalisation de la fonction à partir du code générique peut être trouvée dans l'article suivant :
- S-W. Lee et Al, « Enhanced hot spot détection heuristics for embedded java just-intime compilers », Proceedings of the ACM SIGPLAN Conférence on languages, compilers and tools for embedded systems (LCTES), pp 13-22, 2008.

Les seuils précédemment décrits peuvent également être calculés différemment. Par exemple, le seuil Nf-Vx,Vy est calculé à l'aide de la formule suivante : Nf-Vx,Vy = v(Kgen(f-Vx,Vy)/[Klib(f-Vx,Vy-Kdyn(fVx,Vy)], où v(...) est une fonction continûment croissante comme par exemple une fonction exponentielle ou logarithmique ou un simple produit par une constante numérique.

Dans un autre mode de réalisation, tous les compteurs associés à une même fonction f sont également associés au même seuil, noté Nf. Ainsi, quelle que soit la valeur des paramètres spécialisés de la fonction f, le seuil Nf utilisé est le même. Par contre, les compteurs associés aux différentes fonctions n'ont généralement pas les mêmes seuils. Ainsi, généralement, le seuil Nf est différent du seuil Ng associé à la fonction g. Dans ce mode de réalisation, le seuil est donc commun à tous les compteurs qui sont associés à la même fonction mais indépendant des valeurs spécifiques des paramètres de cette fonction.

De préférence, le seuil Nf est calculé à l'aide de la formule Nf = Kgen(f)/ [Klib(f) - Kdyn(f)], où Kgen(f), Klib(f) et Kdyn(f) sont les mêmes coûts que, respectivement, les coûts Kgen(f-Vx,Vy), Klib(f-Vx,Vy) et Kdyn(f-Vx,Vy) mais calculés indépendamment des valeurs des paramètres pf1 et pf2. Par exemple, Kgen(f), Klib(f) et Kdyn(f) sont mesurés à chaque fois que, respectivement :
- un code spécialisé de la fonction f est généré,
- le code générique de la fonction f est utilisé pour réaliser cette fonction,
- un code spécialisé de la fonction f est exécuté.

Ainsi, le seuil calculé lors de l'étape 72 est commun à tous les compteurs associés à la même fonction de sorte que lors de l'exécution de l'étape 58, quel que soit le compteur qui est utilisé lors de cette étape 58, c'est le même seuil pré-calculé lors de l'étape 72 qui est utilisé

Dans un autre mode de réalisation, les coûts ne sont pas mis à jour dynamiquement ni mesuré. Dans ce cas, l'étape 72 est exécutée une seule fois par le microprocesseur 2 pour initialiser les valeurs des différents seuils utilisés.

La phase 70 peut aussi être omise. Par exemple, les différents seuils associés aux différents compteurs sont des constantes pré-enregistrées à l'avance dans la mémoire 20.

Dans un autre mode de réalisation, à chaque fois qu'une fonction paramétrée est appelée, un code spécialisé correspondant est généré puis exécuté. Dans ce mode de réalisation, la décision de générer un code spécialisé est systématiquement prise. Le procédé de la figure 3 peut alors être simplifié, en particulier, la phase 70 et l'opération 62 sont omises et l'opération 60 est simplifiée. La routine 40 de collecte de données statistiques peut être omise dans ce cas.

D'autres méthodes que celles précédemment décrites peuvent être utilisées pour décider s'il faut déclencher ou non la génération d'un code spécialisé. Par exemple, en variante, les méthodes décrites dans les articles suivants sont utilisables:
- E. Duesterwald et Al, « Software profiling for hot path prédiction : Less is more », International Conférence on Architectural Support for Programming Languages and Operating Systems, ASPLOS, pp 202-211, 2000,
- D. Buytaert et Al, « Using HPM-sampling to drive dynamic compilation », Proceeding of the conférence on Object-Oriented Programming Systems, Languages and Applications, OOPSLA, pp 553-567, 2007,
- M. Arnold et Al. « Adaptive optimisation in the jalapeño JVM », ACM SIGPLAN Notices, vol. 46, n°4, pp 65-83, 2011.

## Revendications

1. Procédé d'exécution d'un programme d'ordinateur comportant une fonction paramétrée susceptible d'être exécutée une ou plusieurs fois au cours de l'exécution du programme, cette fonction comportant au moins un paramètre dont la valeur est obtenue au moment où la fonction est appelée pour être exécutée par un microprocesseur ou durant son exécution par le microprocesseur, ce procédé comportant :
a) la fourniture d'un code générique de la fonction dans lequel chaque paramètre de la fonction est codé comme une variable de sorte que ce code générique ne contient pas en lui-même la valeur de ce paramètre mais contient une opération de lecture de sa valeur à une adresse spécifiée par le code générique,
b) la vérification (58) d'une condition, cette condition étant le franchissement d'un premier seuil pré-calculé par la valeur d'un premier compteur,
c) uniquement si la condition est vérifiée, la génération (60) par le microprocesseur, d'un code spécialisé de cette fonction, dans le langage machine du microprocesseur, puis l'enregistrement dans une mémoire de ce code spécialisé, ce code spécialisé réalisant, lorsqu'il est exécuté par le microprocesseur, la même fonction que le code générique mais dans le cas particulier où au moins un paramètre de la fonction est spécialisé avec une première valeur spécifique, la spécialisation d'un paramètre de la fonction avec la première valeur spécifique consistant à affecter cette valeur spécifique à ce paramètre puis à traiter ce paramètre non plus comme une variable mais comme une constante de sorte que le code spécialisé ne comporte aucune opération de lecture de sa valeur à une adresse située en dehors de la plage continue d'adresses où est enregistré ce code spécialisé,
d) ensuite, lorsque la fonction est réalisée avec la première valeur spécifique du paramètre, si le code spécialisé est enregistré dans la mémoire, le microprocesseur réalise (54) cette fonction en exécutant directement le code spécialisé enregistré dans la mémoire sans utiliser le code générique de cette fonction, et sinon
e) le microprocesseur réalise (58) cette fonction en utilisant son code générique, **caractérisé en ce que** :
- lors de l'exécution du programme, à chaque fois que la fonction est réalisée avec la première valeur spécifique du paramètre, le microprocesseur met à jour (56) la valeur du premier compteur et, en alternance, ne met pas à jour la valeur de ce premier compteur si cette même fonction est réalisée avec une autre valeur du paramètre différente de la première valeur spécifique,
- le microprocesseur exécute aussi les étapes a) à e) en remplaçant la première valeur spécifique, le premier compteur et le premier seuil pré-calculé par, respectivement, une seconde valeur spécifique, un second compteur et un second seuil pré-calculé, la seconde valeur spécifique étant différente de la première valeur spécifique de sorte que le code spécialisé généré dans ce cas est obtenu en spécialisant le paramètre de la fonction avec la seconde valeur spécifique au lieu de la première valeur spécifique, et
- le procédé comporte, avant l'étape b), une étape f) (72) de calcul des premier et second seuils pré-calculés chacun à partir d'un rapport Kgen/(Klib-Kdyn), où :
- Kgen est un coût pré-enregistré pour exécuter l'étape c),
- Kdyn est un coût pré-enregistré pour exécuter l'étape d),
- Klib est un coût pré-enregistré pour exécuter l'étape e), et
les coûts Kgen, Kdyn et Klib sont chacun des quantités respectives d'une même grandeur physique ou d'une même combinaison de grandeurs physiques qui varie selon que le microprocesseur exécute l'étape d) ou l'étape e),
lors du calcul du premier seuil pré-calculé les coûts Kgen, Kdyn et Klib étant des coûts pour exécuter, respectivement, les étapes c), d) et e) uniquement dans le cas où c'est la première valeur spécifique qui est utilisée lors de l'exécution de ces étapes, et
lors du calcul du second seuil pré-calculé les coûts Kgen, Kdyn et Klib étant des coûts pour exécuter, respectivement, les étapes c), d) et e) uniquement dans le cas ou c'est la deuxième valeur spécifique qui est utilisée lors de l'exécution de ces étapes.

2. Procédé selon la revendication 1, dans lequel chaque grandeur physique est choisie dans le groupe composé du temps d'exécution, de l'énergie électrique consommée, de la puissance électrique consommée, de la température du microprocesseur, de l'intensité du bruit généré par ce microprocesseur.

3. Procédé selon l'une quelconque des revendications précédentes, dans lequel lors de l'étape b), si c'est le premier compteur qui est utilisé, c'est le premier seuil qui est utilisé et, en alternance, si c'est le second compteur qui est utilisé, c'est alors le second seuil qui est utilisé à la place du premier seuil.

4. Procédé selon l'une quelconque des revendications précédentes dans lequel :
- les étapes a) à e) sont exécutées pour, respectivement, au moins une première et une seconde fonctions dont les codes génériques sont différents,
- l'exécution de l'étape f) pour la première fonction consiste à calculer un premier seuil à partir des coûts Kgen, Kdyn et Klib obtenus en prenant uniquement en compte les exécutions des étapes c), d) et e) pour la première fonction, seul ce premier seuil étant utilisé lors de l'exécution ultérieure de l'étape b) pour cette première fonction,
- l'exécution de l'étape f) pour la seconde fonction consiste à calculer un second seuil à partir des coûts Kgen, Kdyn et Klib obtenus en prenant uniquement en compte les exécutions des étapes c), d) et e) pour la seconde fonction, seul ce second seuil étant utilisé lors de l'exécution ultérieure de l'étape b) pour cette seconde fonction.

5. Procédé selon l'une quelconque des revendications précédentes, dans lequel, lors de l'exécution des étapes d) et e), le procédé comporte la mesure (74) de ladite quantité de la grandeur physique ou de la combinaison de grandeurs physiques, puis le microprocesseur calcule chaque seuil utilisé lors de l'étape b) à partir des mesures des coûts Kdyn et Klib.

6. Procédé selon la revendication 5, dans lequel, lors de l'exécution de l'étape c), le procédé comporte la mesure (74) de ladite quantité de la grandeur physique ou de la combinaison de grandeurs physiques, puis le microprocesseur calcule chaque seuil utilisé lors de l'étape b) à partir de cette mesure du coût Kgen.

7. Procédé selon les revendications 5 et 6, dans lequel la grandeur physique est le temps d'exécution et le microprocesseur mesure le temps d'exécution de chaque étape c), d) et e) en déclenchant au début de l'exécution de cette étape une minuterie qui décompte le temps écoulé depuis son déclenchement, et en relevant le temps écoulé décompté par la minuterie à la fin de l'exécution de cette étape, le temps écoulé relevé constituant la mesure du temps d'exécution de cette étape.

8. Procédé selon l'une quelconque des revendications précédentes, dans lequel lors de l'étape f) (72), le seuil est calculé à l'aide de la relation suivante : N = Kgen / (Klib - Kdyn), où N est la valeur du seuil calculée.

9. Procédé selon l'une quelconque des revendications précédentes, dans lequel à chaque fois que la fonction f est réalisée avec une valeur spécifique du paramètre, le microprocesseur, incrémente, s'il existe déjà un compteur associé à cette fonction et à cette valeur spécifique du paramètre et, si un tel compteur n'existe pas, crée ce compteur puis l'incrémente.

10. Support d'enregistrement d'informations, **caractérisé en ce qu'**il comporte des instructions pour l'exécution d'un procédé conforme à l'une quelconque des revendications précédentes, lorsque ces instructions sont exécutées par un microprocesseur.

11. Programme d'ordinateur, **caractérisé en ce qu'**il comporte des instructions pour l'exécution d'un procédé conforme à l'une quelconque des revendications précédentes, lorsque ces instructions sont exécutées par un microprocesseur.

12. Unité centrale électronique pour exécuter un programme d'ordinateur comportant une fonction paramétrée susceptible d'être exécutée une ou plusieurs fois au cours de l'exécution du programme, cette fonction comportant au moins un paramètre dont la valeur est obtenue au moment où la fonction est appelée pour être exécutée par un microprocesseur ou durant son exécution par le microprocesseur, cette unité comportant :
- une mémoire ou un ensemble de mémoires (18, 22) contenant un code générique de la fonction dans lequel chaque paramètre de la fonction est codé comme une variable de sorte que ce code générique ne contient pas en lui-même la valeur de ce paramètre mais contient une opération de lecture de sa valeur à une adresse spécifiée par le code générique,
- le microprocesseur (2) programmé pour réaliser les étapes suivantes :
b) la vérification d'une condition, cette condition étant le franchissement d'un premier seuil pré-calculé par la valeur d'un premier compteur,
c) uniquement si la condition est vérifiée, la génération par le microprocesseur, d'un code spécialisé de cette fonction, dans le langage machine du microprocesseur, puis l'enregistrement dans une mémoire de ce code spécialisé, ce code spécialisé réalisant, lorsqu'il est exécuté par le microprocesseur, la même fonction que le code générique mais dans le cas particulier où au moins un paramètre de la fonction est spécialisé avec une première valeur spécifique, la spécialisation d'un paramètre de la fonction avec la première valeur spécifique consistant à affecter cette valeur spécifique à ce paramètre puis à traiter ce paramètre non plus comme une variable mais comme une constante de sorte que le code spécialisé ne comporte aucune opération de lecture de sa valeur à une adresse située en dehors de la plage continue d'adresses où est enregistré ce code spécialisé,
d) ensuite, lorsque la fonction est réalisée avec la première valeur spécifique du paramètre, si le code spécialisé est enregistré dans la mémoire, le microprocesseur réalise cette fonction en exécutant directement le code spécialisé enregistré dans la mémoire sans utiliser le code générique de cette fonction, et sinon
e) le microprocesseur réalise cette fonction en utilisant son code générique,
**caractérisé en ce que** le microprocesseur est également programmé de manière à ce que :
- lors de l'exécution du programme, à chaque fois que la fonction est réalisée avec la première valeur spécifique du paramètre, le microprocesseur met à jour la valeur d'un premier compteur et, en alternance, ne met pas à jour la valeur de ce premier compteur si cette même fonction est réalisée avec une autre valeur du paramètre différente de la première valeur spécifique,
- le microprocesseur exécute aussi les étapes a) à e) en remplaçant la première valeur spécifique, le premier compteur et le premier seuil pré-calculé par, respectivement, une seconde valeur spécifique, un second compteur et un second seuil pré-calculé, la seconde valeur spécifique étant différente de la première valeur spécifique de sorte que le code spécialisé généré dans ce cas est obtenu en spécialisant le paramètre de la fonction avec la seconde valeur spécifique au lieu de la première valeur spécifique, et
- le microprocesseur réalise, avant l'étape b), une étape f) de calcul des premier et second seuils pré-calculés à partir d'un rapport Kgen/(Klib-Kdyn), où :
- Kgen est un coût pré-enregistré pour exécuter l'étape c),
- Kdyn est un coût pré-enregistré pour exécuter l'étape d),
- Klib est un coût pré-enregistré pour exécuter l'étape e), et
les coûts Kgen, Kdyn et Klib sont chacun des quantités respectives d'une même grandeur physique ou d'une même combinaison de grandeurs physiques qui varie selon que le microprocesseur exécute l'étape d) ou l'étape e),
lors du calcul du premier seuil pré-calculé les coûts Kgen, Kdyn et Klib étant des coûts pour exécuter, respectivement, les étapes c), d) et e) uniquement dans le cas où c'est la première valeur spécifique qui est utilisée lors de l'exécution de ces étapes, et
lors du calcul du second seuil pré-calculé les coûts Kgen, Kdyn et Klib étant des coûts pour exécuter, respectivement, les étapes c), d) et e) uniquement dans le cas ou c'est la deuxième valeur spécifique qui est utilisée lors de l'exécution de ces étapes.

## Patentansprüche

1. Verfahren zur Ausführung eines Computerprogramms, das eine parametrisierte Funktion aufweist, die während der Ausführung des Programms einmal oder mehrere Male ausgeführt werden kann, wobei diese Funktion wenigstens einen Parameter aufweist, dessen Wert zu dem Zeitpunkt, zu dem die Funktion aufgerufen wird, um von einem Mikroprozessor ausgeführt zu werden, oder während ihrer Ausführung durch den Mikroprozessor erhalten wird, wobei dieses Verfahren umfasst:
a) die Lieferung eines generischen Codes der Funktion, in welchem jeder Parameter der Funktion als eine Variable codiert ist, derart, dass dieser generische Code nicht den Wert dieses Parameters selbst enthält, sondern einen Vorgang des Lesens seines Wertes an einer Adresse enthält, die durch den generischen Code angegeben wird,
b) die Überprüfung (58) einer Bedingung, wobei diese Bedingung die Überschreitung eines ersten vorausberechneten Schwellenwertes durch den Wert eines ersten Zählers ist,
c) nur falls die Bedingung erfüllt ist, die Erzeugung (60), durch den Mikroprozessor, eines spezialisierten Codes dieser Funktion in der Maschinensprache des Mikroprozessors, danach das Ablegen dieses spezialisierten Codes in einem Speicher, wobei dieser spezialisierte Code, wenn er von dem Mikroprozessor ausgeführt wird, dieselbe Funktion wie der generische Code realisiert, jedoch in dem speziellen Fall, dass wenigstens ein Parameter der Funktion mit einem ersten spezifischen Wert spezialisiert ist, wobei die Spezialisierung eines Parameters der Funktion mit dem ersten spezifischen Wert darin besteht, diesen spezifischen Wert diesem Parameter zuzuweisen und danach diesen Parameter nicht mehr wie eine Variable zu behandeln, sondern wie eine Konstante, so dass der spezialisierte Code keinen Vorgang des Lesens seines Wertes an einer Adresse umfasst, die sich außerhalb des zusammenhängenden Adressbereichs befindet, wo dieser spezialisierte Code abgelegt ist,
d) anschließend, wenn die Funktion mit dem ersten spezifischen Wert des Parameters realisiert wird, falls der spezialisierte Code im Speicher abgelegt ist, realisiert (54) der Mikroprozessor diese Funktion, indem er den im Speicher abgelegten spezialisierten Code direkt ausführt, ohne den generischen Code dieser Funktion zu verwenden, und andernfalls
e) realisiert (58) der Mikroprozessor diese Funktion unter Verwendung ihres generischen Codes,
**dadurch gekennzeichnet, dass**:
- bei der Ausführung des Programms jedes Mal, wenn die Funktion mit dem ersten spezifischen Wert des Parameters realisiert wird, der Mikroprozessor den Wert des ersten Zählers aktualisiert (56) und dagegen den Wert dieses ersten Zählers nicht aktualisiert, falls dieselbe Funktion mit einem anderen Wert des Parameters realisiert wird, der von dem ersten spezifischen Wert verschieden ist,
- der Mikroprozessor auch die Schritte a) bis e) ausführt, indem er den ersten spezifischen Wert, den ersten Zähler und den ersten vorausberechneten Schwellenwert durch einen zweiten spezifischen Wert, einen zweiten Zähler bzw. einen zweiten vorausberechneten Schwellenwert ersetzt, wobei der zweite spezifische Wert vom ersten spezifischen Wert verschieden ist, so dass der in diesem Falle erzeugte spezialisierte Code erhalten wird, indem der Parameter der Funktion mit dem zweiten spezifischen Wert anstelle des ersten spezifischen Wertes spezialisiert wird, und
- das Verfahren vor dem Schritt b) einen Schritt f) (72) der Berechnung des ersten und des zweiten vorausberechneten Schwellenwertes jeweils aus einem Verhältnis Kgen/(Klib-Kdyn) umfasst, wobei:
- Kgen ein im Voraus gespeicherter Kostenaufwand für das Ausführen von Schritt c) ist,
- Kdyn ein im Voraus gespeicherter Kostenaufwand für das Ausführen von Schritt d) ist,
- Klib ein im Voraus gespeicherter Kostenaufwand für das Ausführen von Schritt e) ist, und
die Kostenaufwände Kgen, Kdyn und Klib jeweils entsprechende Werte derselben physikalischen Größe oder derselben Kombination physikalischer Größen sind, welche je nachdem, ob der Mikroprozessor den Schritt d) oder den Schritt e) ausführt, variiert,
wobei bei der Berechnung des ersten vorausberechneten Schwellenwertes die Kostenaufwände Kgen, Kdyn und Klib Kostenaufwände für das Ausführen der Schritte c), d) bzw. e) ausschließlich in dem Falle sind, dass der erste spezifische Wert derjenige ist, welcher bei der Ausführung dieser Schritte verwendet wird, und
wobei bei der Berechnung des zweiten vorausberechneten Schwellenwertes die Kostenaufwände Kgen, Kdyn und Klib Kostenaufwände für das Ausführen der Schritte c), d) bzw. e) ausschließlich in dem Falle sind, dass der zweite spezifische Wert derjenige ist, welcher bei der Ausführung dieser Schritte verwendet wird.

2. Verfahren nach Anspruch 1, wobei jede physikalische Größe aus der Gruppe ausgewählt ist, die aus der Ausführungszeit, der verbrauchten elektrischen Energie, der aufgenommen elektrischen Leistung, der Temperatur des Mikroprozessors und der Intensität des von diesem Mikroprozessor erzeugten Geräusches besteht.

3. Verfahren nach einem der vorhergehenden Ansprüche, wobei im Schritt b), falls der erste Zähler es ist, welcher verwendet wird, der erste Schwellenwert verwendet wird, und falls dagegen der zweite Zähler es ist, welcher verwendet wird, der zweite Schwellenwert dann anstelle des ersten Schwellenwertes verwendet wird.

4. Verfahren nach einem der vorhergehenden Ansprüche, wobei:
- die Schritte a) bis e) jeweils für eine erste und eine zweite Funktion ausgeführt werden, deren generische Codes verschieden sind,
- die Ausführung von Schritt f) für die erste Funktion darin besteht, einen ersten Schwellenwert aus den erhaltenen Kostenaufwänden Kgen, Kdyn und Klib zu berechnen, indem ausschließlich der Ausführungen der Schritte c), d) und e) für die erste Funktion berücksichtigt werden, wobei nur dieser erste Schwellenwert bei der späteren Ausführung von Schritt b) für diese erste Funktion verwendet wird,
- die Ausführung von Schritt f) für die zweite Funktion darin besteht, einen zweiten Schwellenwert aus den erhaltenen Kostenaufwänden Kgen, Kdyn und Klib zu berechnen, indem ausschließlich der Ausführungen der Schritte c), d) und e) für die zweite Funktion berücksichtigt werden, wobei nur dieser zweite Schwellenwert bei der späteren Ausführung von Schritt b) für diese zweite Funktion verwendet wird.

5. Verfahren nach einem der vorhergehenden Ansprüche, wobei bei der Ausführung der Schritte d) und e) das Verfahren die Messung (74) des Wertes der physikalischen Größe oder der Kombination physikalischer Größen beinhaltet, wonach der Mikroprozessor jeden Schwellenwert, der in Schritt b) verwendet wird, aus den Messungen der Kostenaufwände Kdyn und Klib berechnet.

6. Verfahren nach Anspruch 5, wobei bei der Ausführung von Schritt c) das Verfahren die Messung (74) des Wertes der physikalischen Größe oder der Kombination physikalischer Größen beinhaltet, wonach der Mikroprozessor jeden Schwellenwert, der in Schritt b) verwendet wird, aus dieser Messung des Kostaufwands Kgen berechnet.

7. Verfahren nach den Ansprüchen 5 und 6, wobei die physikalische Größe die Ausführungszeit ist und der Mikroprozessor die Ausführungszeit jedes Schrittes c), d) und e) misst, indem er zu Beginn der Ausführung dieses Schrittes einen Timer auslöst, welcher die seit seiner Auslösung vergangene Zeit misst, und indem er die vergangene Zeit ermittelt, die von dem Timer am Ende der Ausführung dieses Schrittes gemessen wurde, wobei die ermittelte vergangene Zeit den Messwert der Ausführungszeit dieses Schrittes darstellt.

8. Verfahren nach einem der vorhergehenden Ansprüche, wobei in Schritt f) (72) der Schwellenwert mithilfe der folgenden Beziehung berechnet wird: N = Kgen / (Klib - Kdyn), wobei N der berechnete Wert des Schwellenwertes ist.

9. Verfahren nach einem der vorhergehenden Ansprüche, wobei jedes Mal, wenn die Funktion f mit einem spezifischen Wert des Parameters realisiert wird, der Mikroprozessor, falls bereits ein dieser Funktion und diesem spezifischen Wert des Parameters zugeordneter Zähler existiert, diesen inkrementiert, und falls ein solcher Zähler nicht existiert, diesen Zähler erzeugt und ihn danach inkrementiert.

10. Informationsaufzeichnungsmedium, **dadurch gekennzeichnet, dass** es Anweisungen zur Ausführung eines Verfahrens gemäß einem der vorhergehenden Ansprüche, wenn diese Anweisungen von einem Mikroprozessor ausgeführt werden, umfasst.

11. Computerprogramm, **dadurch gekennzeichnet, dass** es Anweisungen zur Ausführung eines Verfahrens gemäß einem der vorhergehenden Ansprüche, wenn diese Anweisungen von einem Mikroprozessor ausgeführt werden, umfasst.

12. Elektronische Zentraleinheit zur Ausführung eines Computerprogramms, das eine parametrisierte Funktion aufweist, die während der Ausführung des Programms einmal oder mehrere Male ausgeführt werden kann, wobei diese Funktion wenigstens einen Parameter aufweist, dessen Wert zu dem Zeitpunkt, zu dem die Funktion aufgerufen wird, um von einem Mikroprozessor ausgeführt zu werden, oder während ihrer Ausführung durch den Mikroprozessor erhalten wird, wobei diese Einheit aufweist:
- einen Speicher oder eine Anordnung von Speichern (18, 22), die einen generischen Code der Funktion enthält, in welchem jeder Parameter der Funktion als eine Variable codiert ist, derart, dass dieser generische Code nicht den Wert dieses Parameters selbst enthält, sondern einen Vorgang des Lesens seines Wertes an einer Adresse enthält, die durch den generischen Code angegeben wird,
- den Mikroprozessor (2), der dafür programmiert ist, die folgenden Schritte auszuführen:
b) die Überprüfung einer Bedingung, wobei diese Bedingung die Überschreitung eines ersten vorausberechneten Schwellenwertes durch den Wert eines ersten Zählers ist,
c) nur falls die Bedingung erfüllt ist, die Erzeugung, durch den Mikroprozessor, eines spezialisierten Codes dieser Funktion in der Maschinensprache des Mikroprozessors, danach das Ablegen dieses spezialisierten Codes in einem Speicher, wobei dieser spezialisierte Code, wenn er von dem Mikroprozessor ausgeführt wird, dieselbe Funktion wie der generische Code realisiert, jedoch in dem speziellen Fall, dass wenigstens ein Parameter der Funktion mit einem ersten spezifischen Wert spezialisiert ist, wobei die Spezialisierung eines Parameters der Funktion mit dem ersten spezifischen Wert darin besteht, diesen spezifischen Wert diesem Parameter zuzuweisen und danach diesen Parameter nicht mehr wie eine Variable zu behandeln, sondern wie eine Konstante, so dass der spezialisierte Code keinen Vorgang des Lesens seines Wertes an einer Adresse umfasst, die sich außerhalb des zusammenhängenden Adressbereichs befindet, wo dieser spezialisierte Code abgelegt ist,
d) anschließend, wenn die Funktion mit dem ersten spezifischen Wert des Parameters realisiert wird, falls der spezialisierte Code im Speicher abgelegt ist, realisiert der Mikroprozessor diese Funktion, indem er den im Speicher abgelegten spezialisierten Code direkt ausführt, ohne den generischen Code dieser Funktion zu verwenden, und andernfalls
e) realisiert der Mikroprozessor diese Funktion unter Verwendung ihres generischen Codes,
**dadurch gekennzeichnet, dass** der Mikroprozessor außerdem derart programmiert ist, dass:
- bei der Ausführung des Programms jedes Mal, wenn die Funktion mit dem ersten spezifischen Wert des Parameters realisiert wird, der Mikroprozessor den Wert des ersten Zählers aktualisiert und dagegen den Wert dieses ersten Zählers nicht aktualisiert, falls dieselbe Funktion mit einem anderen Wert des Parameters realisiert wird, der von dem ersten spezifischen Wert verschieden ist,
- der Mikroprozessor auch die Schritte a) bis e) ausführt, indem er den ersten spezifischen Wert, den ersten Zähler und den ersten vorausberechneten Schwellenwert durch einen zweiten spezifischen Wert, einen zweiten Zähler bzw. einen zweiten vorausberechneten Schwellenwert ersetzt, wobei der zweite spezifische Wert vom ersten spezifischen Wert verschieden ist, so dass der in diesem Falle erzeugte spezialisierte Code erhalten wird, indem der Parameter der Funktion mit dem zweiten spezifischen Wert anstelle des ersten spezifischen Wertes spezialisiert wird, und
- der Mikroprozessor vor dem Schritt b) einen Schritt f) der Berechnung des ersten und des zweiten vorausberechneten Schwellenwertes jeweils aus einem Verhältnis Kgen/(Klib-Kdyn) umfasst, wobei:
- Kgen ein im Voraus gespeicherter Kostenaufwand für das Ausführen von Schritt c) ist,
- Kdyn ein im Voraus gespeicherter Kostenaufwand für das Ausführen von Schritt d) ist,
- Klib ein im Voraus gespeicherter Kostenaufwand für das Ausführen von Schritt e) ist, und
die Kostenaufwände Kgen, Kdyn und Klib jeweils entsprechende Werte derselben physikalischen Größe oder derselben Kombination physikalischer Größen sind, welche je nachdem, ob der Mikroprozessor den Schritt d) oder den Schritt e) ausführt, variiert,
wobei bei der Berechnung des ersten vorausberechneten Schwellenwertes die Kostenaufwände Kgen, Kdyn und Klib Kostenaufwände für das Ausführen der Schritte c), d) bzw. e) ausschließlich in dem Falle sind, dass der erste spezifische Wert derjenige ist, welcher bei der Ausführung dieser Schritte verwendet wird, und
wobei bei der Berechnung des zweiten vorausberechneten Schwellenwertes die Kostenaufwände Kgen, Kdyn und Klib Kostenaufwände für das Ausführen der Schritte c), d) bzw. e) ausschließlich in dem Falle sind, dass der zweite spezifische Wert derjenige ist, welcher bei der Ausführung dieser Schritte verwendet wird.

## Claims

1. Method for executing a computer program including at least one parameterized function capable of being executed one or more times during the execution of the program, this function including at least one parameter the value of which is obtained at the instant when the function is called in order to be executed by a microprocessor or during execution thereof by the microprocessor, this method including:
a) providing a generic code for the function, in which code each parameter of the function is encoded as a variable such that this generic code does not itself contain the value of this parameter, but contains an operation of reading its value from an address specified by the generic code,
b) verifying (58) a condition, this condition being the crossing of a first pre-calculated threshold by the value of a first counter,
c) only if the condition is verified, generation (60), by the microprocessor, of a specialized code for this function, in the machine language of the microprocessor, and then recording this specialized code in a memory, this specialized code performing, when it is executed by the microprocessor, the same function as the generic code but, in the particular case where at least one parameter of the function is specialized with a first specific value, the specialization of a parameter of the function with the first specific value, consisting in assigning this specific value to this parameter and then in processing this parameter no longer as a variable but as a constant, such that the specialized code does not include any operation of reading its value from an address situated outside of the continuous range of addresses where this specialized code is recorded,
d) next, when the function is performed with the first specific value of the parameter, if the specialized code is recorded in the memory, the microprocessor performs (54) this function by directly executing the specialized code recorded in the memory without using the generic code for this function, and if not
e) the microprocessor performs (58) this function using its generic code,
**characterized in that**:
- when the program is executed, each time the function is performed with the first specific value of the parameter, the microprocessor updates (56) the value of the first counter and, alternately, does not update the value of this first counter if this same function is performed with another value, different from the first specific value, of the parameter,
- the microprocessor also executes steps a) to e) by replacing the first specific value, the first counter and the first pre-calculated threshold with a second specific value, a second counter and a second pre-calculated threshold, respectively, the second specific value being different from the first specific value, such that the specialized code that is generated in this case is obtained by specializing the parameter of the function with the second specific value instead of the first specific value, and
- the method includes, before step b), a step f) (72) of calculating the first and second pre-calculated thresholds each on the basis of a relationship Kgen/ (Klib-Kdyn), where:
- Kgen is a pre-recorded cost to execute step c),
- Kdyn is a pre-recorded cost to execute step d),
- Klib is a pre-recorded cost to execute step e), and
the costs Kgen, Kdyn and Klib are each respective quantities of one and the same physical variable or of one and the same combination of physical variables that varies depending on whether the microprocessor executes step d) or step e),
when the first pre-calculated threshold is calculated, the costs Kgen, Kdyn and Klib being costs to execute steps c), d) and e), respectively, only in the case where it is the first specific value that is used when these steps are executed, and
when the second pre-calculated threshold is calculated, the costs Kgen, Kdyn and Klib being costs to execute steps c), d) and e), respectively, only in the case where it is the second specific value that is used when these steps are executed.

2. Method according to Claim 1, wherein each physical variable is chosen from the group consisting of the execution time, the electrical energy consumed, the electric power consumed, the temperature of the microprocessor and the intensity of the noise generated by this microprocessor.

3. Method according to either one of the preceding claims, wherein, during step b), if it is the first counter that is used, it is the first threshold that is used and, alternately, if it is the second counter that is used, it is then the second threshold that is used in place of the first threshold.

4. Method according to any one of the preceding claims, wherein:
- steps a) to e) are executed for at least one first and one second function, respectively, the generic codes for which are different,
- the execution of step f) for the first function consists in calculating a first threshold on the basis of the costs Kgen, Kdyn and Klib that are obtained by taking account only of the executions of steps c), d) and e) for the first function, only this first threshold being used during the subsequent execution of step b) for this first function,
- the execution of step f) for the second function consists in calculating a second threshold on the basis of the costs Kgen, Kdyn and Klib that are obtained by taking account only of the executions of steps c), d) and e) for the second function, only this second threshold being used during the subsequent execution of step b) for this second function.

5. Method according to any one of the preceding claims, wherein, when steps d) and e) are executed, the method includes measuring (74) said quantity of the physical variable or the combination of physical variables, and then the microprocessor calculates each threshold that is used during step b) on the basis of the measurements of the costs Kdyn and Klib.

6. Method according to Claim 5, wherein, when step c) is executed, the method includes measuring (74) said quantity of the physical variable or the combination of physical variables, and then the microprocessor calculates each threshold that is used during step b) on the basis of this measurement of the cost Kgen.

7. Method according to Claims 5 and 6, wherein the physical variable is the execution time and the microprocessor measures the execution time of each step c), d) and e) by triggering, at the start of the execution of this step, a timer that counts the time that has elapsed since triggering thereof, and by noting the elapsed time counted by the timer at the end of the execution of this step, the noted elapsed time forming the measurement of the execution time of this step.

8. Method according to any one of the preceding claims, wherein, during step f) (72), the threshold is calculated using the following relationship: N = Kgen / (Klib - Kdyn), where N is the calculated value of the threshold.

9. Method according to any one of the preceding claims, wherein, each time the function f is performed with a specific value of the parameter, the microprocessor increments a counter associated with this function and with this specific value of the parameter, if said counter already exists, and if such a counter does not exist, creates this counter and then increments it.

10. Information recording medium, **characterized in that** it includes instructions for executing a method according to any one of the preceding claims when these instructions are executed by a microprocessor.

11. Computer program, **characterized in that** it includes instructions for executing a method according to any one of the preceding claims when these instructions are executed by a microprocessor.

12. Electronic central unit for executing a computer program including a parameterized function capable of being executed one or more times during the execution of the program, this function including at least one parameter the value of which is obtained at the instant when the function is called in order to be executed by a microprocessor or during execution thereof by the microprocessor, this unit including:
- a memory or a set of memories (18, 22) containing a generic code for the function, in which code each parameter of the function is encoded as a variable such that this generic code does not itself contain the value of this parameter, but contains an operation of reading its value from an address specified by the generic code,
- the microprocessor (2) programmed to perform the following steps:
b) verifying a condition, this condition being the crossing of a first pre-calculated threshold by the value of a first counter,
c) only if the condition is verified, generation, by the microprocessor, of a specialized code for this function, in the machine language of the microprocessor, and then recording this specialized code in a memory, this specialized code performing, when it is executed by the microprocessor, the same function as the generic code but, in the particular case where at least one parameter of the function is specialized with a first specific value, the specialization of a parameter of the function with the first specific value, consisting in assigning this specific value to this parameter and then in processing this parameter no longer as a variable but as a constant, such that the specialized code does not include any operation of reading its value from an address situated outside of the continuous range of addresses where this specialized code is recorded,
d) next, when the function is performed with the first specific value of the parameter, if the specialized code is recorded in the memory, the microprocessor performs this function by directly executing the specialized code recorded in the memory without using the generic code for this function, and if not
e) the microprocessor performs this function using its generic code,
**characterized in that** the microprocessor is also programmed such that:
- when the program is executed, each time the function is performed with the first specific value of the parameter, the microprocessor updates the value of a first counter and, alternately, does not update the value of this first counter if this same function is performed with another value, different from the first specific value, of the parameter,
- the microprocessor also executes steps a) to e) by replacing the first specific value, the first counter and the first pre-calculated threshold with a second specific value, a second counter and a second pre-calculated threshold, respectively, the second specific value being different from the first specific value, such that the specialized code that is generated in this case is obtained by specializing the parameter of the function with the second specific value instead of the first specific value, and
- the microprocessor performs, before step b), a step f) of calculating the first and second pre-calculated thresholds on the basis of a relationship Kgen/(Klib-Kdyn), where:
- Kgen is a pre-recorded cost to execute step c),
- Kdyn is a pre-recorded cost to execute step d),
- Klib is a pre-recorded cost to execute step e), and
the costs Kgen, Kdyn and Klib are each respective quantities of one and the same physical variable or of one and the same combination of physical variables that varies depending on whether the microprocessor executes step d) or step e),
when the first pre-calculated threshold is calculated, the costs Kgen, Kdyn and Klib being costs to execute steps c), d) and e), respectively, only in the case where it is the first specific value that is used when these steps are executed, and
when the second pre-calculated threshold is calculated, the costs Kgen, Kdyn and Klib being costs to execute steps c), d) and e), respectively, only in the case where it is the second specific value that is used when these steps are executed.
